(19) Europäisches Patentamt
European Patent Office
Office européen des brevets

(11) EP 3 650 485 A1

(12) EUROPEAN PATENT APPLICATION

(43) Date of publication:
**13.05.2020 Bulletin 2020/20**

(51) Int Cl.:
***C08G 73/02*** *(2006.01)*

(21) Application number: **18204593.0**

(22) Date of filing: **06.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **3M Innovative Properties Company**
**Saint Paul, MN 55133-3427 (US)**

(72) Inventors:
- **Werness, Jenny**
  **Saint Paul, Minnesota 55133-3427 (US)**
- **Elmore, Douglas L.**
  **Saint Paul, Minnesota 55133-3427 (US)**
- **Higgins, Jeremy Michael**
  **Saint Paul, Minnesota 55133-3427 (US)**
- **Eichler, Jens**
  **41453 Neuss (DE)**
- **Jurjevic, Simone**
  **41453 Neuss (DE)**
- **Goeb, Siegfried Rainer**
  **47877 Willich (DE)**
- **Steiger, Wolf**
  **82538 Geretsried (DE)**
- **Bissinger, Dr. Peter**
  **86911 Diessen (DE)**

(74) Representative: **Mössner, Brigitte**
**3M Deutschland GmbH**
**Office of Intellectual Property Counsel**
**(PC 072P)**
**Carl-Schurz-Strasse 1**
**41453 Neuss (DE)**

# (54) ACID-CURABLE COMPOSITION

(57) The present disclosure relates to an acid-curable composition, comprising:
a) a base component comprising a cationically self-curable oligomeric compound;
b) a curing system for the cationically self-curable oligomeric compound, which comprises:
i. an ionogenic compound comprising an anion and ammonium as a cation; and
ii. water.

According to another aspect, the present disclosure is directed to a curing system suitable for an acid-curable composition comprising a cationically self-curable oligomeric compound. According to still another aspect, the present disclosure relates to a method of manufacturing an acid-curable composition. In yet another aspect, the disclosure relates to the use of an acid-curable composition for industrial applications, in particular for thermal management applications in the automotive industry.

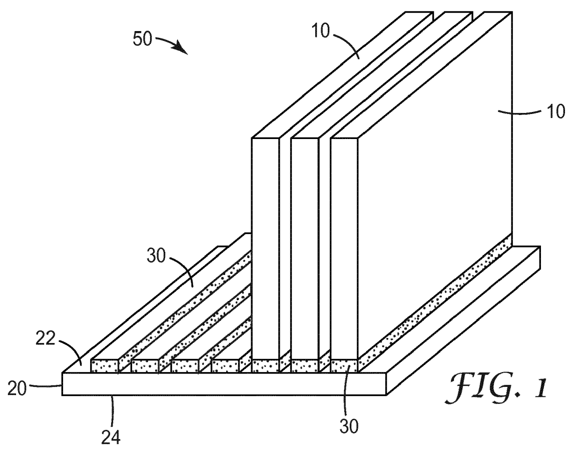


FIG. 1

EP 3 650 485 A1

## Description

### Technical Field

The present disclosure relates generally to the field of curable compositions, more specifically to the field of acid-curable compositions based on cationically self-curable oligomeric compounds. The present disclosure also relates to a curing system suitable for an acid-curable composition comprising a cationically self-curable oligomeric compound. The present disclosure is further directed to a method of manufacturing an acid-curable composition and to the use of an acid-curable composition for industrial applications, in particular for automotive applications, in particular for thermal management applications in the automotive industry.

### Background

Curable compositions, in particular cationically curable compositions, have been known for years as suitable for use in a variety of applications that include general-use industrial applications such as adhesives and coatings, as well as high-performance applications in healthcare industries such as e.g. in dental field. Curing of cationically curable compositions is typically performed by using curing catalysts.

With broadened use of cationically curable compositions over the years, performance requirements have become more and more demanding with respect to, in particular, curing behavior, storage stability and processability characteristics. Examples of cationically curable compositions are described in e.g. US Pat. No. 4,167,618 (Schmitt et al.), US-A1-2008/0200585 (Klettke et al.), US-A1-2013/0030076 (Weinmann et al.), US Pat. No. 6,894,144 (Zech et al.) and US-A1-2003/0153726 (Eckhardt et al.). The cationically curable compositions described in the art typically suffer from various deficiencies including, but not limited to, formulation complexity, cost ineffectiveness, corrosiveness, use of material having detrimental effects to the human body, and storage instability. The known cationically curable compositions are generally also insufficient in terms of providing efficient and reproducible curing characteristics.

Without contesting the technical advantages associated with the solutions known in the art, there is still a need for an acid-curable composition which overcomes the above-mentioned deficiencies.

### Summary

According to one aspect, the present disclosure relates to an acid-curable composition, comprising:

a) a base component comprising a cationically self-curable oligomeric compound;
b) a curing system for the cationically self-curable oligomeric compound, which comprises:

   i. an ionogenic compound comprising an anion and ammonium as a cation; and
   ii. water.

According to another aspect, the present disclosure is directed to a curing system suitable for an acid-curable composition comprising a cationically self-curable oligomeric compound, wherein the curing system comprises:

a) an ionogenic compound comprising an anion and ammonium as a cation; and
b) water.

In still another aspect of the present disclosure, it is provided a method of manufacturing an acid-curable composition, comprising the steps of:

a) providing a base component comprising a cationically self-curable oligomeric compound;
b) providing a curing system for the cationically self-curable oligomeric compound, which comprises:

   i. an ionogenic compound comprising an anion and ammonium as a cation; and
   ii. water; and

c) combining the base component and the curing system.

According to yet another aspect, the present disclosure relates to the use of an acid-curable composition as described above, for industrial applications, in particular for thermal management applications in the automotive industry.

## Brief Description of the Drawings

**FIG. 1** illustrates the assembly of an exemplary battery module according to one aspect of the present disclosure.
**FIG. 2** illustrates the assembled battery module corresponding to FIG. 1.
**FIG. 3** illustrates the assembly of an exemplary battery subunit according to one aspect of the present disclosure.

## Detailed description

According to a first aspect, the present disclosure relates to an acid-curable composition, comprising:

a) a base component comprising a cationically self-curable oligomeric compound;
b) a curing system for the cationically self-curable oligomeric compound, which comprises:

i. an ionogenic compound comprising an anion and ammonium as a cation; and
ii. water.

In the context of the present disclosure, it has been surprisingly found that an acid-curable composition as described above is particularly suitable for manufacturing an acid-cured composition provided with excellent characteristics and performance as to curing efficiency, curing speed, curing profile reproducibility, curing profile predictability and curing profile adjustability. This is a particularly unexpected finding as cationically self-curable oligomeric compounds, when compared to the more conventional small cationically self-curable molecules, are generally recognized as leading to various secondary, complex and undesired chemical reactions in addition to the mainly expected acid-initiated cationic polymerization reaction (e.g. linear polymeric condensation). This multitude of side polymerization reactions, which are mainly due to presence of the oligomeric backbone, are intuitively expected to detrimentally affect the curing characteristics of the initial acid-curable composition, in particular the curing profile reproducibility, due to the substantially uncontrollable nature of the overall curing process involved.

The acid-curable compositions as described above are further characterized by one or more of the following advantageous benefits: (i) easy and cost-effective manufacturing method, based on readily available starting materials and minimized manufacturing steps; (ii) formulation simplicity and versatility; (iii) ability to efficiently cure without the need for any substantial energy input such as elevated temperature or actinic radiation; (iv) safe handling due to non-use of material or products having detrimental effects to the human body; (v) storage and ageing stability; and (vi) ability to develop a robust and versatile curing portfolio for acid-curable compositions which is tailorable to a broad range of specific applications.

Without wishing to be bound by theory, it is believed that these excellent characteristics and performance attributes are due in particular to the presence of a specific curing system in the acid-curable composition, wherein the curing system comprises: a) an ionogenic compound comprising an anion and ammonium as a cation; and b) water.

Still without wishing to be bound by theory, it is believed that the ionogenic compound comprising an anion and ammonium as a cation operates together with water as an excellent protonating agent for the cationically self-curable oligomeric compounds, thereby resulting in a cationic self-polymerization intermediate which forms with the resulting anion a salt provided with excellent stability and chemical reactivity. Surprisingly, neither the counter anion nor the ammonia adversely affects the overall self-curing process. This is a highly unexpected and counterintuitive finding as ammonium salts are typically recognized as substantially delaying the cationic polymerization process of cationically self-curable oligomeric compounds, in particular due to the nucleophilic nature of the amine resulting for the deprotonation of the ammonium which can lead to unwanted competitive nucleophilic addition reactions.

As such, the acid-curable composition of the present disclosure is outstandingly suitable for thermal management applications in the automotive industry, in particular for the manufacturing of a thermally-conductive gap filler composition which may advantageously be used in the manufacturing of battery modules. Advantageously still, the acid-curable composition of the disclosure is suitable for automated handling and application, in particular by fast robotic equipment, due in particular to its excellent curing characteristics and dimensional stability.

In the context of the present disclosure, the expression "acid-curable composition" is meant to designate a composition which can be cured using an initiator containing or able to produce an acid. The term "initiator" is meant to refer to a substance or a group of substances able to start or initiate or contribute to the curing process of the curable composition. The expression "cationically self-curable oligomeric compound" is meant to designate an oligomeric compound which can be cured using an initiator containing or able to produce cations, especially reactive cations, whereby the oligomeric compound cures and forms polymeric products resulting from the chemical reaction of the oligomeric compound almost exclusively with itself. In the context of the present disclosure still, the term "ionogenic compound" is

meant to refer to a compound which is able to be ionized and form ions.

Cationically self-curable oligomeric compounds for use herein are not particularly limited. Suitable cationically self-curable oligomeric compounds for use herein may be easily identified by those skilled in the art in the light of the present disclosure.

According to one advantageous aspect of the acid-curable composition of the disclosure, the cationically self-curable oligomeric compound for use herein is able to cure (polymerize) by cationic ring-opening polymerization. Accordingly, and in a beneficial aspect, the cationically self-curable oligomeric compound for use in the present disclosure comprises at least two heterocyclic groups, in particular cyclic amine groups.

According to another advantageous aspect of the disclosure, the cationically self-curable oligomeric compound for use herein is further crosslinkable, in particular able to participate in crosslinking reactions of the polymer product resulting from the curing (polymerization) of the cationically self-curable oligomeric compounds.

In a beneficial aspect of the disclosure, the cationically self-curable oligomeric compound for use herein is an oligomer having, in particular a number average molecular weight of at least 2000 g/mol, at least 3000 g/mol, or even at least 4000 g/mol. Unless otherwise indicated, the number average molecular weight is determined by GPC using appropriate techniques well known to those skilled in the art.

In another beneficial aspect of the disclosure, the cationically self-curable oligomeric compound for use herein has a number average molecular weight no greater than 20.000 g/mol, no greater than 15.000 g/mol, no greater than 12.000 g/mol, no greater than 10.000 g/mol, or even no greater than 9.000 g/mol.

In still another beneficial aspect of the disclosure, the cationically self-curable oligomeric compound for use herein has a number average molecular weight in a range from 2000 to 20.000 g/mol, from 3000 to 15.000 g/mol, or even from 3000 to 10.000 g/mol.

According to a beneficial aspect of the disclosure, the cationically self-curable oligomeric compound for use herein is a polyfunctional compound comprising at least one cyclic amine, preferably two cyclic amines. In an exemplary aspect, the cyclic amine which may be comprised in the cationically self-curable oligomeric compound for use herein is selected from the group consisting of aziridines, azetidines, pyrrolidines, piperidines, and any combinations or mixtures thereof.

In one advantageous aspect, the cationically self-curable oligomeric compound for use herein is a polyfunctional compound comprising at least two aziridine functional groups. More advantageously, the cationically self-curable oligomeric compound for use herein is a polyfunctional aziridine, in particular a bis-aziridino compound.

In a more advantageous aspect of the disclosure, the cationically self-curable oligomeric compound is an aziridino-functional oligomer. Advantageously, the cationically self-curable oligomeric compound is an aziridino-functional polar oligomer.

In an exemplary aspect, the aziridino-functional oligomer for use herein has a number average molecular weight no greater than 20.000 g/mol, no greater than 15.000 g/mol, no greater than 12.000 g/mol, no greater than 10.000 g/mol, or even no greater than 9.000 g/mol.

According to another advantageous aspect of the disclosure, the cationically self-curable oligomeric compound for use herein is an aziridino-functional compound based on an oligomeric backbone, in particular a linear or branched oligomer backbone, more in particular a linear or branched polar oligomer backbone.

In an exemplary aspect, the oligomeric backbone for use in the aziridino-functional compound comprises moieties selected from the group consisting of polyether, polyester, polythioether, polysulfide, silicone, polyalkylene, polystyrene, and any combinations of mixtures thereof. In a more advantageous aspect, the oligomeric backbone for use in the aziridino-functional compound comprises moieties selected from the group consisting of polyether, polyester, polythioether, and any combinations of mixtures thereof.

According to an advantageous aspect, the cationically self-curable oligomeric compound is an aziridino-functional (linear or branched) polyether oligomer, in particular an N-alkyl aziridino-functional (linear or branched) polyether oligomer.

Aziridino-functional polyether polymers have been found to provide a good balance of desired properties, in particular when used for the manufacturing of a thermally-conductive gap filler composition. Generally, the polyether backbone provides both the desired uncured rheological properties as well as the desired cured mechanical and thermal properties, while allowing the necessary filler loadings to achieve adequate thermal conductivity.

Polyether oligomers for use herein may be chosen based upon on a variety of factors, including the desired thermal and mechanical properties. Polyether generally refer to polymers having ether groups in their main chain (as opposed to side chains). Suitable polyether oligomers for use in the present disclosure include aliphatic polyether oligomers. Such polyether oligomers include straight and branched alkylene groups connected through the ether linkages. In some aspects, the alkylene groups have 1 to 6 carbon atoms, e.g., 2 to 4 carbon atoms.

The polyether oligomer may be a homopolymer having repeat units of only a single alkylene group or a copolymer of two or more alkylene groups. Such copolymers may be block copolymers, multi-block copolymers, alternating copolymers, or random copolymers. Such copolymers can show homogenous or gradient distributions of the monomers along

the chain. In some embodiments, the copolymers may contain blocks of homopolymer, blocks of random copolymers, blocks of alternating copolymers, and combinations thereof.

The polyether blocks may be selected from polytetrahydrofuran, polypropylene oxide, polyethylene oxide, copolymers of ethyleneoxide and tetrahydrofuran, copolymers of propylene oxide and tetrahydrofuran, copolymers of ethylene oxide and propylene oxide, block copolymers of ethylene oxide and propylene oxide and random terpolymers of ethylene oxide, propylene oxide, and tetrahydrofuran.

The polyether oligomers may be prepared by the polymerization or copolymerization of cyclic ethers. Suitable cyclic ethers include, e.g., oxirane, alkyl-oxiranes (e.g., methyl-oxirane and ethyl-oxirane), substituted alkyl-oxiranes (e.g., chloromethyl-oxirane, hydoxymethyl-oxiranes, alkoxyalkyl-oxiranes, and phenoxyalkyl-oxiranes), oxetane, tetrahydrofurane, and substituted tetrahydrofuranes, e.g., 3-methyl-tetrahydrofurane.

A polyether oligomer of the general formula consisting of one, two three or more different repeating units is:

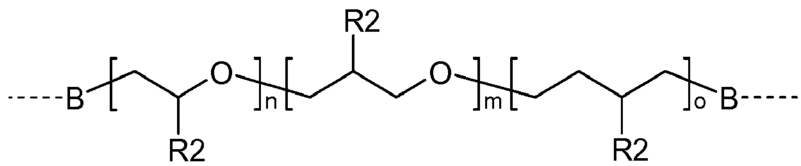

wherein:

B is O or $NR^4$;
$R^4$ is H, a $C_1$ to $C_{12}$-Alkyl, a $C_2$ to-$C_{12}$-Alkenyl, or an Aryl;
each $R^2$ is independently selected from H, alkyl (e.g., methyl, ethyl), substituted alkyl (e.g., chloromethyl, hydroxymethyl), and phenyl; and
n, m, and o are integers.

Integers m, n, and o may be independently selected and may be zero, provided that at least one is not zero, and these values are selected such that the resulting molecular weight meets the desired conditions. In some aspects, n, m, and o are selected such that the molecular weight is at least 2000 g/mol, at least 3000 g/mol, or even at least 4000 g/mol. In some aspects, n, m, and o are selected such that the molecular weight is no greater than 20.000 g/mol, no greater than 15.000 g/mol, or even no greater than 10.000 g/mol. In some aspects, n, m, and o are selected such that the molecular weight is between 2000 and 20.000 g/mol, between 3000 and 15.000 g/mol, or even between 3000 and 10.000 g/mol, where all ranges are inclusive of the end points.

Aziridino functional (sometime referred to as aziridinyl functional) organic moieties are attached to backbones containing oxygen atoms in the main chain. In some aspects, the aziridino functional group is of the formula:

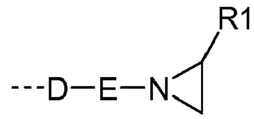

wherein:

D is selected from C(=O)O, $C(=O)NR^5$, C(=O), $C(=O)C(=O)N(R^5)$, $C(=O)(CH_2)_p(C(=O)$, $C(=S)NR^5$, and $CH_2$;
E is an alkylene group; and
$R^1$ is H, a $C_1$ to $C_{12}$-Alkyl, a $C_2$ to $C_{12}$-Alkenyl, or an Aryl;
$R^5$ is H, a $C_1$ to $C_{12}$-Alkyl, a $C_2$ to $C_{12}$-Alkenyl, or an Aryl;
and p is an integer.

In some aspects, $R^1$ is H-, Methyl-, Ethyl-, Ethenyl-, Propenyl-, Phenyl-, or Tolyl-. Exemplary aziridino functional groups include:

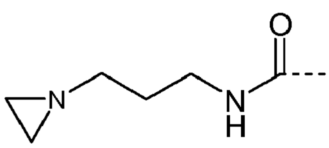

where: D = C(=O)NR$^5$ (with R$^5$ = H); E = 1,3-propandiyl;

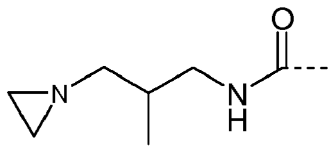

where: D = C(=O)NR$^5$ (with R$^5$ = H); E = 2-methyl-1,3-propandiyl;

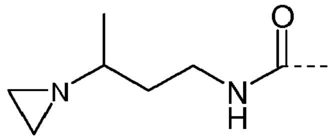

where: D = C(=O)NR$^5$ (with R$^5$ = H); E = 1,3-butandiyl;

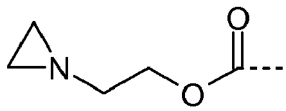

where: D = C(O)O; E = 1,2-ethandiyl;

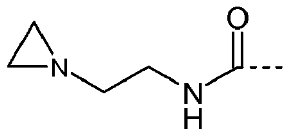

where: D = C(O)O; E = 1,2-ethandiyl;

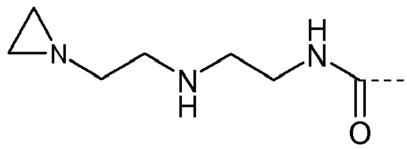

where: D = C(O)NH; E = 2-aza-1,4-butandiyl;

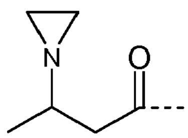

where: D = C(O); E = 2-methyl-1,2-propandiyl;

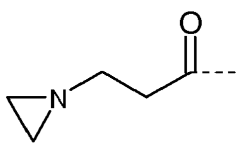

where: D = C(O); E = 1,2-ethandiyl;

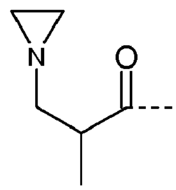

where: D = C(O); E = 1-methyl-1,2-propandiyl;

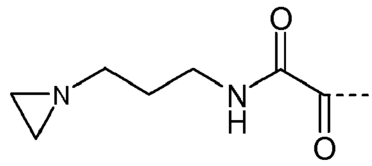

where: D = C(=O)C(=O)NR$^5$ (with R$^5$ = H); E = 1,3-propandiyl;

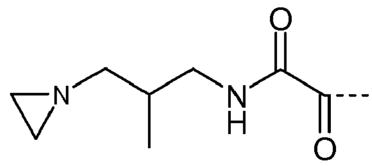

where: D = C(=O)C(=O)NR$^5$ (with R$^5$ = H); E = 2-methyl-1,3-propandiyl; and

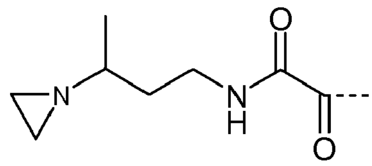

where: D = C(=O)C(=O)NR$^5$ (with R$^5$ = H); E = 1,3-butandiyl.

The aziridino groups may be attached to the polyether backbone through any of a variety of divalent linking groups. For example, they may be attached through carbonate-, urethane-, urea-, ester- ether- or other linkages.

Suitable polyether oligomers may be produced in a manner known to those skilled in the art by the reaction of the starting compound having a reactive hydrogen atom with alkylene oxides, for example ethylene oxide, propylene oxide, butylene oxide, styrene oxide, tetrahydrofuran or epichlorohydrine or mixtures of two or more thereof. Especially suitable polyether oligomers for use herein are obtainable by polyaddition of ethylene oxide, 1,2-propylene oxide, 1,2-butylene oxide or tetrahydrofuran or of mixtures of two or more of the mentioned compounds with the aid of a suitable starting compound and a suitable catalyst.

In one beneficial aspect, suitable polyether oligomers for use herein are polyetherdiols obtainable by cationic copolymerization of ethylene oxide and tetrahydrofuran units under catalytic action of boron trifluoride etherate. In a particularly beneficial aspect, suitable polyether oligomers for use herein are polyetherdiols obtainable by cationic copolymerization of propylene oxide units. Suitable cationically self-curable compounds for use herein and possible production methods thereof are described e.g. in U.S. Pat. No. 3,453,242 (Schmitt et al.).

According to one preferred execution of the present disclosure, the cationically self-curable oligomeric compound for use herein has the following formula:

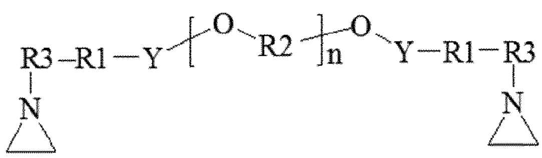

wherein:

$R^1$ is a covalent bond or an alkylene group;
each $R^2$ is independently selected from the group consisting of alkylene groups;
$R^3$ is a straight chain or branched alkylene groups;
Y is a divalent linking group;
and n is an integer selected such that the calculated number average molecular weight of the polyether oligomer is in particular greater than 2000 g/mol.

According to another preferred execution of the present disclosure, the cationically self-curable oligomeric compound for use herein has the following formula:

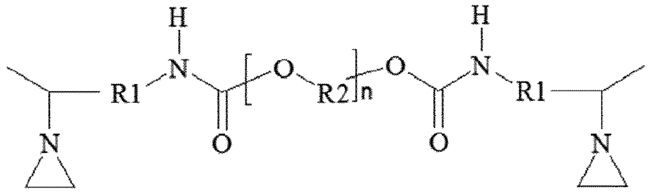

wherein:

$R^1$ is an alkylene group;
each $R^2$ is independently selected from the group consisting of alkylene groups having 2 to 6 carbon atoms; and
n is an integer selected such that the calculated number average molecular weight of the polyether oligomer is in particular between 2000 and 10.000 g/mol.

In some aspects, n is selected such that the molecular weight is at least 2000 g/mol, at least 3000 g/mol, or even at least 4000 g/mol. In some other aspects, n is selected such that the molecular weight is no greater than 20.000 g/mol, no greater than 15.000 g/mol, or even no greater than 10.000 g/mol. In some aspects, n is selected such that the molecular weight is between 2000 and 20.000 g/mol, between 3000 and 15.000 g/mol, or even between 3000 and 10.000 g/mol, where all ranges are inclusive of the end points.

In some aspects, $R^1$ is an alkylene group having 1 to 4 carbon atoms, e.g., 2 carbon atoms. The alkylene groups may be straight chain or branched alkylene groups.

Generally, the $R^2$ groups may be selected independently from the $R^1$ group. Therefore, any selection of the $R^2$ groups may be combined with any selection of the $R^1$ group.

In some instances, each $R^2$ is independently selected from the group consisting of straight chain and branched alkylene groups having 1 to 6 carbon atoms, e.g., 2 to 4 carbon atoms. In some other instances, the $R^2$ groups comprise alkylene groups having three carbon atoms. In some other instances, each of the $R^2$ groups is an alkylene groups having three carbon atoms.

According to still another preferred execution of the present disclosure, the cationically self-curable oligomeric compound for use herein has the following formula:

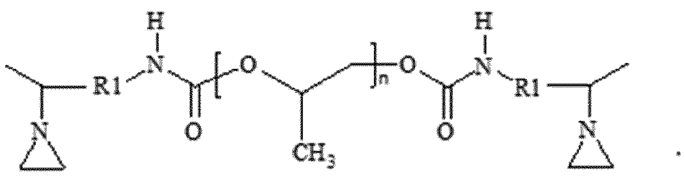

In an advantageous aspect, $R^1$ is an alkylene group having two carbon atoms. In another advantageous aspect, $R^2$ is independently selected from the group consisting of linear alkylene groups having 2 to 6 carbon atoms.

According to still another advantageous aspect of the present disclosure, the cationically self-curable oligomeric compound for use herein has the following formula:

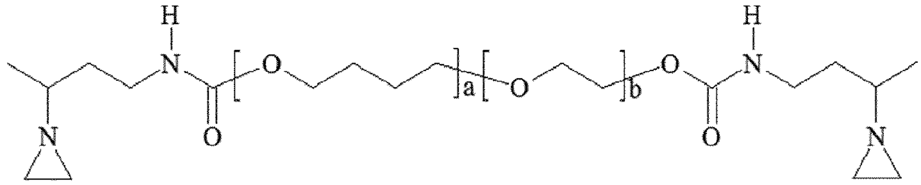

wherein a and b are integers greater than or equal to 1, and the sum of a and b is equal to n.

Although the $R^1$ groups are show as ethylene groups, other alkylene groups may be used. It is understood that the polymer can be a block copolymer, a random copolymer or any other arrangement of repeating units.

According to an exemplary aspect of the disclosure, n is selected such that the calculated number average molecular weight of the cationically self-curable oligomeric compound is no greater than 10.000 grams/mole.

According to one typical aspect of the curable composition according to the disclosure, the curing system for the cationically self-curable oligomeric compound is initiated at a temperature T1 which is in particular no greater than 90°C, no greater than 80°C, no greater than 60°C, no greater than 50°C, no greater than 40°C, no greater than 30°C, no greater than 25°C, no greater than 20°C, or even no greater than 15°C.

In one advantageous aspect of the disclosure, the curing system of the cationically self-curable oligomeric compound for use herein is able to cure the acid-curable composition without the need for any substantial energy input such as elevated temperature or actinic radiation. The curing temperature may be varied as desired, in particular throughout the cure process in order to control the curing properties.

In a more advantageous aspect, the acid-curable composition of the present disclosure may be cured at relatively low temperature, such as e.g., room temperature (in particular 23°C).

In another advantageous aspect of the disclosure, the curing system for the cationically self-curable oligomeric compound is initiated at a temperature T1 which is in a range from -10°C to 85°C, from 0°C to 80°C, from 5°C to 60°C, from 5°C to 50°C, from 10°C to 40°C, or even from 15°C to 35°C.

Ionogenic compounds for use herein are not particularly limited. Any ionogenic compounds commonly known in the art of curable compositions may be used in the context of the present disclosure, as long as they comprise ammonium as a cation. Suitable ionogenic compounds for use herein may be easily identified by those skilled in the art in the light of the present disclosure.

According to one typical aspect of the present disclosure, the ionogenic compound for use herein is an acid generating compound, in particular a protonating agent.

In one advantageous aspect of the disclosure, the curing system for the cationically self-curable oligomeric compound results from the protonation of ammonia by a Broensted acid or a precursor of a Broensted acid. More advantageously, the Broensted acid for use herein has a pKa no greater than 2.5.

In a more advantageous aspect, the Broensted acid for use herein is selected from the group consisting of hexafluorophosphoric acid, hexafluoroantimonic acid, tetrafluoroboric acid, sulfonic acids, phosphonic acids, fluorinated organic acids, polymeric acids, saturated carboxylic acids, unsaturated carboxylic acids, and any combinations or mixtures thereof.

According to one particularly advantageous aspect of the disclosure, the Broensted acid for use herein is selected from the group consisting of hexafluorophosphoric acid, tetrafluoroboric acid, sulfonic acids, saturated carboxylic acids, and any combinations or mixtures thereof.

According to the advantageous aspect according to which the Broensted acid for use herein is selected from the group of sulfonic acids, the latter may be beneficially selected from the group consisting of alkylsulphonic acids, fluoroalkylsulphonic acids, alkylbenzenesulphonic acids, and any combinations or mixtures thereof.

According to an even more advantageous aspect, the sulfonic acid for use as a Broensted acid is selected from the group consisting of p-toluenesulphonic acid, undecylbenzenesulphonic acid, dodecylbenzenesulphonic acid, tridecylbenzenesulphonic acid, trifluoromethanesulphonic acid, methylsulphonic acid, and any mixtures thereof.

Anions for use herein as part of the ionogenic compound are not particularly limited. As will be apparent to the skilled person, suitable anions may be advantageously selected to form a reasonably stable albeit reactive ionogenic compound in combination with ammonium cation. Suitable anions for use herein as part of the ionogenic compound may be easily identified by those skilled in the art in the light of the present disclosure.

According to an advantageous aspect of the disclosure, the anion of the ionogenic compound is selected from the group consisting of low- and non-coordinating anions, and any combinations or mixtures thereof. More advantageously, the anion of the ionogenic compound is selected from the group consisting of low-nucleophilic anions.

The classification of the anions as to their nucleophilic nature is made, for example, in the manner described by C. G. Swain, et al. in J. Am. Chem. Soc., 75, page 141 (1953) or by A. B. Ash, et al. in J. Org. Chem., 34, page 4071 (1969).

In one advantageous execution of the curable composition, the anion of the ionogenic compound for use herein

is selected from the group consisting of $PF_6^-$, $BF_4^-$, $SbF_6^-$, $AsF_6^-$, $CF_3SO_3^-$, and SbFsOH $^-$. More advantageously, the anion of the ionogenic compound for use herein is selected from the group consisting of $PF_6^-$, $BF_4^-$, $SbF_6^-$, $AsF_6^-$ , and SbFsOH $^-$.

According to a particularly preferred aspect of the curable composition, the anion of the ionogenic compound for use in the present disclosure is selected from the group consisting of $PF_6^-$ and $BF_4^-$.

According to another particularly preferred aspect of the curable composition of the present disclosure, the ionogenic compound for use herein is selected from the group consisting of ammonium tetrafluoroborate and ammonium hexafluorophosphate.

The reactants and reagents present in the acid-curable composition of the disclosure (in particular, the cationically self-curable oligomer compound, the ionogenic compound and water) may be used in any appropriate amount depending on the targeted application and characteristics expected for the acid-curable composition and the resulting cured composition.

In the context of the present disclosure, it has been indeed found that a strong correlation exists between the curing speed achieved and the respective amounts of the ionogenic compound and the cationically self-curable oligomer compound. Similarly, a strong correlation has been determined between the curing speed achieved and the respective amount of water. Accordingly, the respective amounts of the various reactants and reagents may be suitably adjusted and tailored to the targeted application and anticipated performance attributes, in particular the overall curing speed.

It has been no less surprisingly found that the acid-curable composition of the disclosure and comprising in particular a curing system as described above, provides outstanding characteristics related to curing profile reproducibility, curing profile predictability and curing profile adjustability. These performance attributes are extremely valuable in the context of any industrial manufacturing processes and processing steps.

According to one advantageous aspect of the disclosure, the curable composition of the disclosure comprises a cationically self-curable oligomeric compound and a ionogenic compound in a molar ratio ranging from 1:1 to 1:20, from 1:1 to 1:18, from 1:2 to 1:18, from 1:2 to 1:16, from 1:3 to 1:16, from 1:3 to 1:15, from 1:3 to 1:13, or even from 1:4 to 1:13.

According to another advantageous aspect, the curable composition of the disclosure comprises a cationically self-curable oligomeric compound and a ionogenic compound in a molar ratio ranging from 0.5:1 to 1:20, from 0.5:1 to 1:15, from 0.5:1 to 1:10, from 0.5:1 to 1:8, from 1:1 to 1:8, from 1:1 to 1:5, from 1:1 to 1:4, or even from 1:1 to 1:3.

According to still another advantageous aspect of the disclosure, the curable composition of the disclosure comprises a cationically self-curable oligomeric compound and water in a molar ratio ranging from 1:10 to 1:200, from 1:10 to 1:180, from 1:20 to 1:180, from 1:20 to 1:160, from 1:30 to 1:160, from 1:30 to 1:150, from 1:30 to 1:130, from 1:40 to 1:130, or even from 1:40 to 1:120.

According to still another advantageous aspect of the disclosure, the curable composition of the disclosure comprises a cationically self-curable oligomeric compound and water in a molar ratio ranging from 0.5:10 to 1:200, from 0.5:10 to 1:150, from 0.5:10 to 1:100, from 0.5:10 to 1:80, from 1:10 to 1:80, from 1:10 to 1:50, from 1:10 to 1:40, or even from 1:10 to 1:30.

According to still another advantageous aspect of the disclosure, the curable composition of the disclosure comprises an ionogenic compound and water in a molar ratio ranging from 1:5 to 1:20, from 1:5 to 1:18, from 1:5 to 1:16, from 1:6 to 1:16, from 1:8 to 1:15, from 1:8 to 1:13, from 1:8 to 1:12, from 1:9 to 1:12, or even from 1:9 to 1:11.

In one exemplary aspect, the acid-curable composition of the disclosure is in the form of a two-part composition having a first part and a second part, wherein:

a) the first part comprises:

i. the ionogenic compound; and
ii. water;

b) the second part comprises the base component comprising the cationically self-curable oligomeric compound;

wherein the first part and the second part are kept separated prior to combining the two parts and forming the (acid-)cured composition.

A two-part curable composition is particularly preferred when curing at low temperature (e.g. room temperature of about 23°C) is targeted, or when the curing is anticipated to be performed without any substantial energy input such as elevated temperature or actinic radiation.

The non-reactive components of the curable composition may be distributed as desired between the two parts. In some aspects, some of the non-reactive components may be present in both parts. It may be desirable to distribute the various components such that the subsequent mixing of the two parts is made easier, in particular in terms of viscosity matching.

The acid-curable composition of the present disclosure is particularly suitable for manufacturing an acid-cured composition provided with excellent characteristics and performance as to curing efficiency, curing speed, and curing profile adjustability. As such, the curable composition based on the curing system as described above readily allows developing a robust and versatile curing portfolio for acid-curable compositions which is tailorable to a broad range of specific applications.

According to one exemplary aspect, the acid-curable composition of the disclosure is curable at 23°C at a curing percentage greater than 90%, greater than 95%, greater than 98%, or even greater than 99%, after a curing time no greater than 72 hours, no greater than 48 hours, or even no greater than 24 hours.

Unless otherwise stated, the curing percentage and curing time are measured by near IR spectroscopy according to techniques well known to those skilled in the art and using a Thermo Nicolet iS50 Series FT-IR spectrometer (available from Thermo Fisher Scientific Inc., USA).

According to another exemplary aspect, the acid-curable composition of the disclosure is curable at 23°C at a curing percentage greater than 90%, greater than 95%, greater than 98%, or even greater than 99%, after a curing time no greater than 180 minutes, no greater than 210 minutes, no greater than 180 minutes, no greater than 150 minutes, no greater than 120 minutes, no greater than 100 minutes, no greater than 90 minutes, no greater than 80 minutes, no greater than 70 minutes, no greater than 60 minutes, no greater than 50 minutes, no greater than 40 minutes, or even no greater than 30 minutes.

The curing time may be adjusted as desired depending on the targeted applications and manufacturing requirements.

According to one advantageous aspect, the acid-curable composition according to the disclosure is a thermally-conductive gap filler composition comprising in particular a thermally-conductive filler.

In the context of the present disclosure, it has been indeed surprisingly discovered that the acid-curable composition of the present disclosure is outstandingly suitable for thermal management applications, in particular for the manufacturing of a thermally-conductive gap filler composition which may advantageously be used in the manufacturing of battery modules for use in the automotive industry. This is in particular due to the outstanding characteristics and performance as to curing efficiency, curing speed, curing profile reproducibility, curing profile predictability and curing profile adjustability provided by the acid-curable composition according to the disclosure, in combination with the other advantageous properties described throughout the present description.

The thermally-conductive gap filler compositions based on the acid-curable composition according to the disclosure are particularly suitable for use in batteries and battery assemblies, specifically the types of batteries used in electric and hybrid electric automobiles. The usefulness of the compositions, however, is not so limited. The thermally-conductive gap filler compositions described herein may find use wherever such materials are used, for instance, in electronics (e.g., consumer electronics) applications.

Thermal management plays an important role in many electronics applications. For example, challenges for integrating lithium-ion batteries into electric vehicle battery packs include performance, reliability and safety. Proper thermal management of battery assemblies contributes to addressing each of these challenges. This includes both first level thermal management where battery cells are assembled in a battery module, and second level thermal management where these modules are assembled into battery subunits or battery systems. Thermal management can also be important in the cooling of battery control units, as well as non-battery electronic applications.

Currently, thermal management for battery assemblies relies on curable-liquid gap fillers or pads. The curable liquids flow during assembly and can adjust to dimensional variations before being cured. Also, the liquids can be applied at the time of assembly allowing greater design flexibility. However, the current uncured and cured compositions have several limitations including the presence of contaminants, as discussed below. Pads comprise a pre-determined lay-out of cured material; thus, pads have a reduced tendency to introduce contaminants. However, the cured materials may not provide sufficient conformability to accommodate the range of dimensional variations seen in typical battery assemblies. Also, design changes can be more costly and complex, as new design lay-outs must be generated.

Liquid thermal gap fillers are typically based on silicones or polyurethanes. Although silicones offer good elastomer properties for this application, they often contain non-functional polymer and volatile residuals from their production processes. Electrical contacts of the battery cell can become contaminated by silicone oil migration. Residuals of volatiles can lead to shrinkage over time. Also, even minute amounts of non-functional polymer can lead to detrimental contamination on metal surfaces inhibiting adhesion of paints or adhesives.

In the context of the present disclosure, it has been unexpectedly found that thermally-conductive gap filler compositions based on the acid-curable composition according to the disclosure may substantially overcome the above-mentioned deficiencies.

In some aspects, thermally-conductive gap filler compositions based on the acid-curable composition according to the disclosure may provide one or more of the following advantageous benefits: (i) easily adjustable cure profile to allow adaption to specific working cycles; (ii) advantageous rheological behavior of the uncured composition; (iii) sufficient open time before cure to allow components to be applied and positioned; (iv) rapid cure after the open time; (v) curing

without additional energy input, in particular thermal energy or actinic radiation; (vi) compositions curable without the need for expensive catalysts such as platinum; (vii) advantageous wetting behavior on parts; (viii) stability of the cured composition; (ix) advantageous softness and spring back (recovery on deformation) properties to ensure good contact under use conditions; (x) absence of air inclusions and gas or bubble formation to minimize reduction in thermal conductivity; (xi) absence of contaminants, such as e.g. unreacted components and low molecular weight materials, or volatile components; and (xii) good bonding between sequentially cured layers of the same material.

According to one exemplary aspect, the acid-curable composition for use herein comprises at least 30% by volume, at least 50% by volume, at least 65% by volume, or even at least 70% by volume of the thermally-conductive filler, based on the total volume of the curable composition. The amount of thermally-conductive filler for use in the curable composition may be varied and appropriately chosen depending on the desired level of thermal conductivity.

Generally, any known thermally conductive fillers may be used, although electrically insulting fillers may be preferred where breakthrough voltage is a concern. Suitable electrically insulating, thermally conductive fillers include ceramics such as oxides, hydrates, silicates, borides, carbides, and nitrides. Suitable oxides include, e.g., silicon oxide and aluminum oxide. Suitable nitrides include, e.g., boron nitride. Suitable carbides include, e.g., silicon carbide. Other thermally conducting fillers include graphite and metals such as aluminum. Through-plane thermal conductivity is most critical in this application. Therefore, in some aspects, generally symmetrical (e.g., spherical fillers) may be preferred, as asymmetrical fibers, flakes, or plates may tend to align in the in-plane direction;

To aide in dispersion and increase filler loading, in some embodiments, the thermally conductive fillers may be surface-treated or coated. Generally, any known surface treatments and coatings may be suitable.

According to one advantageous aspect of the disclosure, the thermally-conductive filler for use herein is selected from the group consisting of ceramics, metals, graphite, and any combinations or mixtures thereof.

The thermally-conductive gap filler compositions may advantageously comprise additional ingredients depending on the targeted applications and performance attributes.

According to one exemplary aspect, the thermally-conductive gap filler composition of the present disclosure further comprises at least one of a plasticizer, a flame retardant and flame-retardant plasticizer.

In one particular aspect, the thermally-conductive gap filler composition of the present disclosure may provide flame retardancy and therefore include solid flame-retardant additives that may use intumescent materials (for example, expandable graphite and phosphorous compounds). Other solid flame-retardant additives include aluminum hydroxide compounds (for instance, Aluminum trihydroxide) and ammonium salts (such as e.g. ammonium tetrafluoroborate and ammonium hexafluorophosphate). Specific solid flame-retardant materials include those selected from the group consisting of an intumescent material, an aluminum hydroxide, and combinations thereof. Specifically, the intumescent material may be selected from the group consisting of phosphorous and expandable graphite. Furthermore, when the thermally-conductive gap filler is a phosphorous material, it may be selected from red phosphorous and white phosphorous.

In some advantageous aspects, it may be beneficial to use liquid flame-retardant plasticizer such as a phosphoric acid alkyl ester. For instance, useful liquid flame retardant plasticizers include those having the general formula $OP(OR^1)(OR^2)(OR^3)$, wherein each of $R^1$, $R^2$ and $R^3$ is independently selected from a $C_1$-$C_{10}$ aliphatic group (no aromatic ring) and a $C_6$-$C_{20}$ aryl group, a $C_7$-$C_{30}$ alkylaryl group, and a $C_7$-$C_{30}$ arylalkyl group. Such liquid flame-retardant plasticizers include, for instance, 2-ethylhexyldiphenyl phosphate.

According to an exemplary aspect, the thermally-conductive gap filler composition based on the acid-curable composition according to the disclosure has a thermal conductivity of at least 0.5 W/mK, at least 1.0 W/mK, at least 1.5 W/mK, or even at least 2 .0 W/mK, when measured according to the test method described in the experimental section.

According to another exemplary aspect, the thermally-conductive gap filler composition according to the disclosure has a thermal conductivity of from 0.5 to 10 W/mK, from 1.0 to 10 W/mK, from 1.5 to 10 W/mK, from 2.0 to 8.0 W/mK, from 2.0 to 7.0 W/mK, or even from 2.0 to 5.0 W/mK, when measured according to the test method described in the experimental section.

When the acid-curable composition according to the disclosure is used for the manufacturing of a thermally-conductive gap filler composition, one curing-related parameter which can be of importance is the so-called "open time", also referred to sometimes as "working time". As will be easily apparent to those skilled in the art of curable compositions, the open time of a curable composition may be defined as the point of time when the composition can no longer be practically used for the targeted application, due for example to excessive viscosity.

In some specific applications, a relatively long open time may be required after applying the curable composition in order to reposition parts, in particular large parts. This is particularly the case when the thermally-conductive gap filler composition is advantageously used in the manufacturing of battery modules for use in the automotive industry. Indeed, during the assembly of a battery module which is typically formed by positioning a plurality of battery cells, the curable composition to be used is not yet fully cured. Making use of a curable thermally-conductive gap filler composition having a relatively long open time will advantageously allow the individual battery cells to be positioned and repositioned as needed to achieve the desired layout and configuration.

According to one advantageous aspect of the disclosure, the curable composition for use herein has an open time of at least 5 minutes, at least 10 minutes, or even at least 15 minutes.

According to another advantageous aspect of the disclosure, the curable composition for use herein has an open time of at least 60 minutes, at least 90 minutes, or even at least 120 minutes.

In another aspect, the present disclosure is directed to a cured composition obtainable by at least partially curing the curable composition as described above, wherein the cured composition further comprises ammonia, and optionally, some residual of the ionogenic compound comprising an anion and ammonium as a cation.

In still another aspect, the present disclosure relates to a cured composition comprising the self-curing reaction product of a cationically self-curable oligomeric compound, wherein the cured composition further comprises ammonia, and optionally, a ionogenic compound comprising an anion and ammonium as a cation.

All the particular and preferred aspects relating to, in particular, the cationically self-curable oligomeric compound, the ionogenic compound and the thermally-conductive gap filler composition which were described hereinabove in the context of the acid-curable composition, are fully applicable to the cured composition as described above.

According to typical aspect of the cured composition of the present disclosure, the self-curing reaction product of the cationically self-curable oligomeric compound is substantially fully cured and has, in particular, a curing percentage greater than 90%, greater than 95%, greater than 98%, or even greater than 99%.

According to an advantageous aspect of the cured composition of the present disclosure, the self-curing reaction product of the cationically self-curable oligomeric compound comprises or consists of a polyetherimine, in particular a linear or branched polyethylenimine (PEI).

In another aspect of the present disclosure, it is provided a curing system suitable for an acid-curable composition comprising a cationically self-curable oligomeric compound, wherein the curing system comprises:

a) an ionogenic compound comprising an anion and ammonium as a cation; and
b) water.

All the particular and preferred aspects relating to, in particular, the cationically self-curable oligomeric compound, the ionogenic compound and the thermally-conductive gap filler composition which were described hereinabove in the context of the acid-curable composition, are fully applicable to the curing system as described above.

According to another aspect, the present disclosure is directed to a battery module comprising a plurality of battery cells connected to a first base plate by a first layer of a first thermally-conductive gap filler composition as described above.

According to still another aspect, the present disclosure relates to a battery subunit comprising a plurality of battery modules connected to a second base plate by a second layer of a second thermally-conductive gap filler composition, wherein each battery module comprises a plurality of battery cells connected to a first base plate by a first layer of a first thermally-conductive gap filler composition, wherein the first thermally-conductive gap filler composition and the second thermally-conductive gap filler composition are independently selected, and wherein each is a thermally-conductive gap filler composition as described above.

All the particular and preferred aspects relating to, in particular, the cationically self-curable oligomeric compound, the ionogenic compound and the thermally-conductive gap filler composition which were described hereinabove in the context of the acid-curable composition, are fully applicable to the battery module and battery subunit as described above.

Components of a representative battery module during assembly are shown in **FIG. 1**, and the assembled battery module is shown in **FIG. 2.** Battery module **50** is formed by positioning a plurality of battery cells **10** on first base plate **20**. Generally, any known battery cell may be used including, e.g., hard case prismatic cells or pouch cells. The number, dimensions, and positions of the cells associated with a battery module may be adjusted to meet specific design and performance requirements. The constructions and designs of the base plate are well-known, and any base plate (typically metal base plates) suitable for the intended application may be used.

Battery cells **10** are connected to first base plate **20** through first layer **30** of a first thermally conductive gap filler according to the present disclosure. As described herein, such thermally-conductive gap filler compositions comprise a base component comprising a cationically self-curable oligomeric compound; a curing system comprising: (a) an ionogenic compound comprising an anion and ammonium as a cation, and (b) water; and a thermally-conductive filler.

First layer **30** of the first thermally conductive gap filler provides first level thermal management where the battery cells are assembled in a battery module. As a voltage difference (e.g., a voltage difference of up to 2.3 Volts) is possible between the battery cells and the first base plate, breakthrough voltage may be an important safety feature for this layer. Therefore, in some embodiments, electrically insulating fillers like ceramics (typically alumina and boron nitride) may be preferred for use in the first thermally conductive gap filler.

In some aspects, layer **30** may comprise a discrete pattern of the first thermally conductive gap filler applied to first surface **22** of first base plate **20**, as shown in **FIG. 1.** For example, a pattern of gap filler corresponding to the

desired lay-out of the battery cells may be applied, e.g., robotically applied, to the surface of the base plate. The first layer may be formed as a coating of the first thermally conductive gap filler covering all, or substantially all, of the first surface of the first base plate. Alternatively, the first layer may be formed by applying the first thermally conductive gap filler directly to the battery cells and then mounting them to the first surface of the first base plate.

During the assembly step illustrated in **FIG. 1**, the first thermally conductive gap filler is not yet fully cured. This allows the individual battery cells to be positioned and repositioned as needed to achieve the desired layout. The rheological behavior of the not-fully-cured thermally conductive gap filler aides in allowing the gap filler to flow and accommodate the dimensional variations (tolerances) within and between individual battery cells.

In some aspects, the gap filler may need to accommodate dimensional variations of up to 2 mm, up to 4 mm, or even more. Therefore, in some aspects, the first layer of the first thermally conductive gap filler is at least 0.05 mm thick, e.g., at least 0.1 mm, or even at least 0.5 mm thick. Higher breakthrough voltages may require thicker layers depending on the electrical properties of the gap filler, e.g., in some aspects, at least 1, at least 2, or even at least 3 mm thick. Generally, to maximize heat conduction through the gap filler and to minimize cost, the gap filler layer should be as thin as possible, while still ensuring good (thermal) contact with first base plate **20.** Therefore, in some aspects, the first layer is no greater than 5 mm thick, e.g., no greater than 4 mm thick, or even no greater than 2 mm thick.

In some aspects, the thermally-conductive gap filler exhibits shear thinning behavior in its uncured state. This can assist in the uniform application of the gap filler by, e.g., spray, jet, or roll coating. This rheological behavior may aide in allowing the gap filler to be applied using conventional robotic techniques. Shear thinning may also aide in easing the positioning of the individual battery cells by allowing easier movement while still holding the cells in place before final cure is achieved.

As the thermally-conductive gap filler cures, the battery cells are held more firmly in-place. Further, when curing is complete, the battery cells are finally fixed in their desired position, as illustrated in **FIG. 2.** Accordingly, to better automate the manufacturing process, it is important to be able to also predict and control the so-called curing time.

Additional elements, such as bands **40** may be used to secure the cells for transport and further handling. Generally, it is desirable for the control cure thermally-conductive gap filler to cure at typical application conditions, e.g., without the need for elevated temperatures or actinic radiation (e.g., ultraviolet light). In some embodiments, the first thermally conductive gap filler cures at no greater than 30 °C, e.g., no greater than 25 °C, or even no greater than 20 °C.

As shown in **FIG. 3**, a plurality of battery modules **50**, such as those illustrated and described with respect to **FIGS. 1** and **2**, are assembled to form battery subunit **100.** The number, dimensions, and positions of the modules associated with a particular battery subunit may be adjusted to meet specific design and performance requirements. The constructions and designs of the second base plate are well-known, and any base plate (typically metal base plates) suitable for the intended application may be used.

Individual battery modules **50** are positioned on and connected to second base plate **120** through second layer **130** of a second thermally conductive gap filler, which may be a control cure thermally-conductive gap filler containing the curing agent described herein.

The second layer **130** of a second thermally conductive gap filler is positioned between second surface **24** of first base plate **20** (see **FIGS. 1** and **2**) and first surface **122** of second base plate **120.** The second thermally conductive gap filler provides second level thermal management where the battery modules are assembled into battery subunits. The second thermally conductive gap filler may be a control cure thermally-conductive gap filler. Further, at this level, breakthrough voltage may not be a requirement. Therefore, in some aspects, electrically conductive fillers such as graphite and metallic fillers may be used, alone or in combination with electrically insulating fillers like ceramics.

The second layer **130** may be formed as a coating of the second thermally conductive gap filler covering all or substantially all of first surface **122** of second base plate **120**, as shown in **FIG. 3.** Alternatively, the second layer may comprise a discrete pattern of the second thermally conductive gap filler applied to the surface of the second base plate. For example, a pattern of gap filler corresponding to the desired lay-out of the battery modules may be applied, e.g., robotically applied, to the surface of the second base plate. In alternative embodiments, the second layer may be formed by applying the second thermally conductive gap filler directly to second surface **24** of first base plate **20** (see **FIGS. 1** and **2**) and then mounting the modules to first surface **122** of second base plate **120.**

During the assembly step, the second thermally conductive gap filler is not yet fully cured. This allows the individual battery modules to be positioned and repositioned as needed to achieve the desired layout. As the second thermally conductive gap filler continues to cure, the battery modules are held more firmly in-place, until they are finally fixed in their desired position. Thus, it is important to be able to predict and control the so-called pot life and cure times of the gap filler.

The second thermally conductive gap filler may exhibit shear thinning behavior in its uncured (or not fully cured) state. This can assist in the uniform application of the gap filler to the surface of the second base plate by, e.g., spray, jet, or roll coating. This rheological behavior may aide in allowing the gap filler to be applied the surface of the second base plate using conventional robotic techniques or may aide in easing the positioning of the individual battery modules by allowing easier movement while still holding the modules in place before final cure is achieved.

Starting with a liquid, not-fully-cured thermally conductive gap filler also aides in allowing the gap filler to flow and accommodate varying dimensional variations (tolerances) within and between individual battery modules. Therefore, in some embodiments, the layer of second thermally conductive gap filler is at least 0.05 mm thick, e.g., at least 0.1, or even at least 0.5 mm thick. In some aspects, thicker layers may be required to provide the required mechanical strength, e.g., in some embodiments, at least 1, at least 2, or even at least 3 mm thick. Generally, to maximize heat conduction through the gap filler and to minimize cost, the second layer should be as thin as possible, while still ensure good contact. Therefore, in some aspects, the second layer is no greater than 5 mm thick, e.g., no greater than 4 mm thick, or even no greater than 2 mm thick.

The assembled battery subunits may be combined to form further structures. For example, as is known, battery modules may be combined with other elements such as battery control units to form a battery system, e.g., battery systems used in electric vehicles. Additional layers of thermally conductive gap filler according to the present disclosure may be used in the assembly of such battery systems. For example, thermally conductive gap filler according to the present disclosure may be used to mount and help cool the battery control unit.

According to another aspect, the present disclosure is directed to a method of manufacturing an acid-curable composition, comprising the steps of:

a) providing a base component comprising a cationically self-curable oligomeric compound;
b) providing a curing system for the cationically self-curable oligomeric compound, which comprises:

i. an ionogenic compound comprising an anion and ammonium as a cation; and
ii. water; and

c) combining the base component and the curing system.

Reproducing the method of manufacturing an acid-curable composition as described above is well within the capabilities of those skilled in the art reading the present disclosure.

The method for preparing an acid-curable composition may comprise dissolving the ionogenic compound in water, mixing the dissolved ionogenic compound with the base component comprising a cationically self-curable oligomeric compound, optionally in the presence of a thermally-conductive filler. The thermally-conductive filler may be mixed with the ionogenic compound before mixing the ionogenic compound with the base component, or it may be mixed with the base component before mixing the ionogenic compound with the base component, or a first and second amount of thermally-conductive filler may be mixed into each of the ionogenic compound and the base component before mixing the two parts together.

In one particular aspect of the method of manufacturing an acid-curable composition , in particular a two-part acid-curable composition, the thermally-conductive filler is first mixed with all the unreactive liquids (such as e.g. solvents, liquid flame retardant or dispersant) of the first part of the two-part curable composition, and then the curing system comprising the ionogenic compound and water is added to this mixture, thereby forming the first part of the two-part curable composition. This first part is then combined with the second part comprising the base component comprising the cationically self-curable oligomeric compound.

According to still another aspect, the present disclosure is directed to a method of curing an acid-curable composition, comprising the steps of:

a) providing a base component comprising a cationically self-curable oligomeric compound;
b) providing a curing system for the cationically self-curable oligomeric compound, which comprises:

i. an ionogenic compound comprising an anion and ammonium as a cation; and
ii. water;

c) combining the base component and the curing system thereby forming an acid-curable composition; and
d) at least partially curing, preferably substantially fully curing, the acid-curable composition of step c) by initiating the curing system for the self-curable oligomeric compound, thereby forming a partially or a substantially fully cured composition.

All the particular and preferred aspects relating to, in particular, the cationically self-curable oligomeric compound, the ionogenic compound and the thermally-conductive gap filler composition which were described hereinabove in the context of the acid-curable composition, are fully applicable to the method for preparing an acid-curable composition and to the method of curing an acid-curable composition as described above.

In yet another aspect of the present disclosure, it is provided a method of manufacturing a battery module,

which comprises the steps of:

a) applying a first layer of a first thermally-conductive gap filler composition as described above to a first surface of a first base plate;
b) attaching a plurality of battery cells to the first layer to connect the battery cells to the first base plate; and
c) curing the first thermally-conducting gap filler composition.

In yet another aspect, the present disclosure relates to a method of manufacturing a battery subunit, which comprises the steps of:

a) applying a second layer of a second thermally-conductive gap filler composition as described above to a first surface of a second base plate;
b) attaching a plurality of battery modules to the second layer to connect the battery modules to the second base plate; and
c) curing the second thermally-conducting gap filler composition.

According to still another aspect, the present disclosure relates to the use of an acid-curable composition or a cured composition as described above, for industrial applications, in particular for automotive applications, more in particular for thermal management applications in the automotive industry.

According to yet another aspect, the present disclosure relates to the use of an acid-curable composition or a cured composition as described above, for the manufacturing of a thermally-conductive gap filler composition.

In yet another aspect, the present disclosure relates to the use of an acid-curable composition or a cured composition as described above, for the manufacturing of a battery module comprising a plurality of battery cells, in particular for use in the automotive industry.

In yet another aspect, the present disclosure relates to the use of a curing system as described above for the manufacturing of an-acid curable composition, in particular comprising a cationically self-curable oligomeric compound.

In yet another aspect, the present disclosure relates to the use of a curing system as described above for thermal management applications, in particular in the automotive industry.

According to still another aspect, the present disclosure is directed to the use of a curing system as described above for the manufacturing of a thermally-conductive gap filler composition.

According to still another aspect, the present disclosure is directed to the use of a curing system as described above for the manufacturing of a battery module comprising a plurality of battery cells, in particular for use in the automotive industry.

Item 1 is an acid-curable composition, comprising:

a) a base component comprising a cationically self-curable oligomeric compound;
b) a curing system for the cationically self-curable oligomeric compound, which comprises:

i. an ionogenic compound comprising an anion and ammonium as a cation; and
ii. water.

Item 2 is a curable composition according to item 1, wherein the cationically self-curable oligomeric compound cures by cationic ring-opening polymerization.

Item 3 is a curable composition according to any of item 1 or 2, wherein the cationically self-curable oligomeric compound is further crosslinkable.

Item 4 is a curable composition according to any of the preceding items, wherein the cationically self-curable oligomeric compound has a number average molecular weight of at least 2000 g/mol, at least 3000 g/mol, or even at least 4000 g/mol.

Item 5 is a curable composition according to any of the preceding items, wherein the cationically self-curable oligomeric compound has a number average molecular weight no greater than 20.000 g/mol, no greater than 15.000 g/mol, no greater than 12.000 g/mol, no greater than 10.000 g/mol, or even no greater than 9.000 g/mol.

Item 6 is a curable composition according to any of the preceding items, wherein the cationically self-curable oligomeric compound has a number average molecular weight in a range from 2000 to 20.000 g/mol, from 3000 to 15.000 g/mol, or even from 3000 to 10.000 g/mol.

Item 7 is a curable composition according to any of the preceding items, wherein the cationically self-curable oligomeric compound is a polyfunctional compound comprising at least one cyclic amine, preferably two cyclic amines.

Item 8 is a curable composition according to item 7, wherein the cyclic amine is selected from the group consisting

of aziridines, azetidines, pyrrolidines, piperidines, and any combinations or mixtures thereof.

Item 9 is a curable composition according to any of the preceding items, wherein the cationically self-curable oligomeric compound is a polyfunctional compound comprising at least two aziridine functional groups.

Item 10 is a curable composition according to any of the preceding items, wherein the cationically self-curable oligomeric compound is a polyfunctional aziridine, in particular a bis-aziridino compound.

Item 11 is a curable composition according to any of the preceding items, wherein the cationically self-curable oligomeric compound is an aziridino-functional oligomer, in particular an aziridino-functional polar oligomer.

Item 12 is a curable composition according to any of the preceding items, wherein the cationically self-curable oligomeric compound is an aziridino-functional compound based on an oligomer backbone, in particular a polar (linear or branched) oligomer backbone, comprising in particular a polyether, a polyester or a polythioether.

Item 13 is a curable composition according to any of the preceding items, wherein the cationically self-curable oligomeric compound is an aziridino-functional (linear or branched) polyether oligomer, in particular an N-alkyl aziridino-functional (linear or branched) polyether oligomer.

Item 14 is a curable composition according to item 13, wherein the (linear or branched) polyether oligomer backbone is obtained by copolymerization of propylene oxide units.

Item 15 is a curable composition according to item 13, wherein the (linear or branched) polyether oligomer backbone is obtained by copolymerization of tetrahydrofuran units, ethylene oxide units, and any combinations or mixtures thereof.

Item 16 is a curable composition according to any of the preceding items, wherein the cationically self-curable oligomeric compound has the following formula:

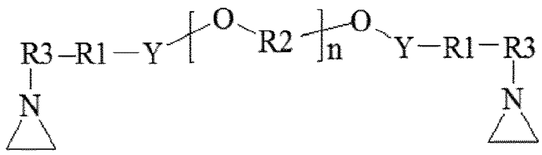

wherein:

- $R^1$ is a covalent bond or an alkylene group;
- each $R^2$ is independently selected from the group consisting of alkylene groups;
- $R^3$ is a straight chain or branched alkylene groups;
- Y is a divalent linking group;
- and n is an integer selected such that the calculated number average molecular weight of the polyether oligomer is in particular greater than 2000 g/mol.

Item 17 is a curable composition according to any of the preceding items, wherein the cationically self-curable oligomeric compound has the following formula:

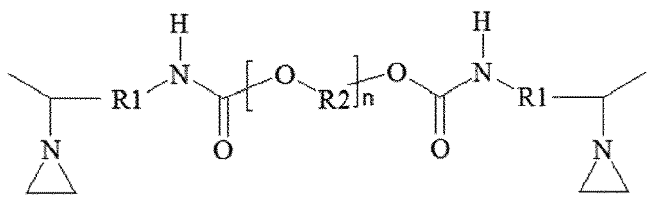

wherein:

- $R^1$ is an alkylene group;
- each $R^2$ is independently selected from the group consisting of alkylene groups having 2 to 6 carbon atoms; and
- n is an integer selected such that the calculated number average molecular weight of the polyether oligomer is in particular between 2000 and 10.000 g/mol.

Item 18 is a curable composition according to any of item 16 or 17, wherein the cationically self-curable oligomeric compound has the following formula:

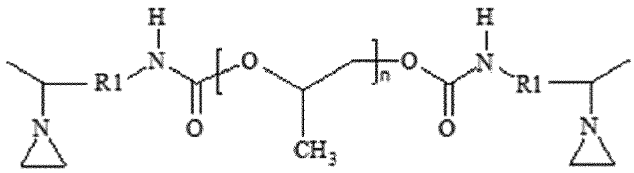

Item 19 is a curable composition according to any of items 15 to 18, wherein $R^1$ is an alkylene group having two carbon atoms.

Item 20 is a curable composition according to any of item 16 or 17, wherein $R^2$ is independently selected from the group consisting of linear alkylene groups having 2 to 6 carbon atoms.

Item 21 is a curable composition according to item 16, wherein the cationically self-curable oligomeric compound has the following formula:

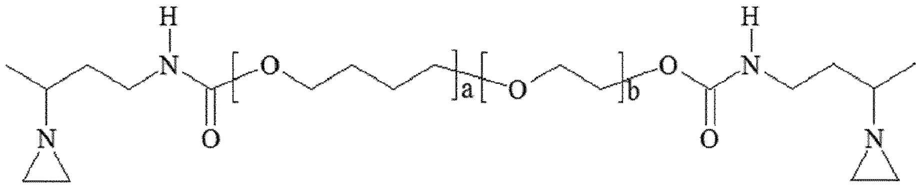

wherein a and b are integers greater than or equal to 1, and the sum of a and b is equal to n.

Item 22 is a curable composition according to any of items 16 to 18, wherein n is selected such that the calculated number average molecular weight of the cationically self-curable oligomeric compound is no greater than 10.000 grams/mole.

Item 23 is a curable composition according to any of the preceding items, wherein the curing system for the cationically self-curable oligomeric compound is initiated at a temperature T1 which is in particular no greater than 90°C, no greater than 80°C, no greater than 60°C, no greater than 50°C, no greater than 40°C, no greater than 30°C, no greater than 25°C, no greater than 20°C, or even no greater than 15°C.

Item 24 is a curable composition according to item 23, wherein the temperature T1 is in a range from -10°C to 85°C, from 0°C to 80°C, from 5°C to 60°C, from 5°C to 50°C, from 10 to 40°C, or even from 15 to 35°C.

Item 25 is a curable composition according to any of the preceding items, wherein the ionogenic compound is an acid generating compound, in particular a protonating agent.

Item 26 is a curable composition according to any of the preceding items, wherein the curing system for the cationically self-curable oligomeric compound results from the protonation of ammonia by a Broensted acid or a precursor of a Broensted acid.

Item 27 is a curable composition according to any of the preceding items, wherein the anion of the ionogenic compound results from the deprotonation of a Broensted acid or a precursor of a Broensted acid.

Item 28 is a curable composition according to any of item 26 or 27, wherein the Broensted acid has a pKa no greater than 2.5.

Item 29 is a curable composition according to any of items 26 to 28, wherein the Broensted acid is selected from the group consisting of hexafluorophosphoric acid, hexafluoroantimonic acid, tetrafluoroboric acid, sulfonic acids, phosphonic acids, fluorinated organic acids, polymeric acids, saturated carboxylic acids, unsaturated carboxylic acids, and any combinations or mixtures thereof.

Item 30 is a curable composition according to any of items 26 to 28, wherein the Broensted acid is selected from the group consisting of hexafluorophosphoric acid, tetrafluoroboric acid, sulfonic acids, saturated carboxylic acids, and any combinations or mixtures thereof.

Item 31 is a curable composition according to any of item 29 or 30, wherein the sulfonic acid is selected from the group consisting of alkylsulphonic acids, fluoroalkylsulphonic acids, alkylbenzenesulphonic acids, and any combinations or mixtures thereof.

Item 32 is a curable composition according to any of items 29 to 31, wherein the sulfonic acid is selected from the group consisting of p-toluenesulphonic acid, undecylbenzenesulphonic acid, dodecylbenzenesulphonic acid, tridecylbenzenesulphonic acid, trifluoromethanesulphonic acid, methylsulphonic acid, and any mixtures thereof.

Item 33 is a curable composition according to any of the preceding items, wherein the anion of the ionogenic compound is selected from the group consisting of low- and non-coordinating anions, and any combinations or mixtures thereof.

Item 34 is a curable composition according to any of the preceding items, wherein the anion of the ionogenic compound is selected from the group consisting of low-nucleophilic anions.

Item 35 is a curable composition according to any of the preceding items, wherein the anion of the ionogenic compound is selected from the group consisting of $PF_6^-$, $BF_4^-$, $SbF_6^-$, $AsF_6^-$, and SbFsOH $^-$.

Item 36 is a curable composition according to any of the preceding items, wherein the anion of the ionogenic compound is selected from the group consisting of $PF_6^-$ and $BF_4^-$.

Item 37 is a curable composition according to any of the preceding items, wherein the ionogenic compound is selected from the group consisting of ammonium tetrafluoroborate and ammonium hexafluorophosphate.

Item 38 is a curable composition according to any of the preceding items, which comprises a cationically self-curable oligomeric compound and a ionogenic compound in a molar ratio ranging from 1:1 to 1:20, from 1:1 to 1:18, from 1:2 to 1:18, from 1:2 to 1:16, from 1:3 to 1:16, from 1:3 to 1:15, from 1:3 to 1:13, or even from 1:4 to 1:13.

Item 39 is a curable composition according to any of items 1 to 37, which comprises a cationically self-curable oligomeric compound and a ionogenic compound in a molar ratio ranging from 0.5:1 to 1:20, from 0.5:1 to 1:15, from 0.5:1 to 1:10, from 0.5:1 to 1:8, from 1:1 to 1:8, from 1:1 to 1:5, from 1:1 to 1:4, or even from 1:1 to 1:3.

Item 40 is a curable composition according to any of the preceding items, which comprises a cationically self-curable oligomeric compound and water in a molar ratio ranging from 1:10 to 1:200, from 1:10 to 1:180, from 1:20 to 1:180, from 1:20 to 1:160, from 1:30 to 1:160, from 1:30 to 1:150, from 1:30 to 1:130, from 1:40 to 1:130, or even from 1:40 to 1:120.

Item 41 is a curable composition according to any of items 1 to 39, which comprises a cationically self-curable oligomeric compound and water in a molar ratio ranging from 0.5:10 to 1:200, from 0.5:10 to 1:150, from 0.5:10 to 1:100, from 0.5:10 to 1:80, from 1:10 to 1:80, from 1:10 to 1:50, from 1:10 to 1:40, or even from 1:10 to 1:30.

Item 42 is a curable composition according to any of the preceding items, which comprises an ionogenic compound and water in a molar ratio ranging from 1:5 to 1:20, from 1:5 to 1:18, from 1:5 to 1:16, from 1:6 to 1:16, from 1:8 to 1:15, from 1:8 to 1:13, from 1:8 to 1:12, from 1:9 to 1:12, or even from 1:9 to 1:11.

Item 43 is a curable composition according to any of the preceding items, which is in the form of a two-part composition having a first part and a second part, wherein:

a) the first part comprises:

i. the ionogenic compound; and
ii. water;

b) the second part comprises the base component comprising the cationically self-curable oligomeric compound;

wherein the first part and the second part are kept separated prior to combining the two parts and forming the (acid-)cured composition.

Item 44 is a curable composition according to any of the preceding items, which is curable at 23°C at a curing percentage greater than 90%, greater than 95%, greater than 98%, or even greater than 99%, after a curing time no greater than 72 hours, no greater than 48 hours, or even no greater than 24 hours.

Item 45 is a curable composition according to any of the preceding items, which is curable at 23°C at a curing percentage greater than 90%, greater than 95%, greater than 98%, or even greater than 99%, after a curing time no greater than 180 minutes, no greater than 210 minutes, no greater than 180 minutes, no greater than 150 minutes, no greater than 120 minutes, no greater than 100 minutes, no greater than 90 minutes, no greater than 80 minutes, no greater than 70 minutes, no greater than 60 minutes, no greater than 50 minutes, no greater than 40 minutes, or even no greater than 30 minutes.

Item 46 is a curable composition according to any of the preceding items, which is curable without using any actinic radiation, in particular UV light.

Item 47 is a curable composition according to any of the preceding items, which is a thermally-conductive gap filler composition comprising a thermally-conductive filler.

Item 48 is a curable composition according to item 47, which comprises at least 30% by volume, at least 50% by volume, at least 65% by volume, or even at least 70% by volume of the thermally-conductive filler, based on the total volume of the curable composition.

Item 49 is a curable composition according to any of item 47 or 48, wherein the thermally-conductive filler is selected from the group consisting of ceramics, metals, graphite, and any combinations or mixtures thereof.

Item 50 is a curable composition according to any of items 47 to 49, which further comprises at least one of a plasticizer, a flame retardant and flame-retardant plasticizer.

Item 51 is a curable composition according to item 50, wherein the flame-retardant plasticizer is a liquid flame-retardant plasticizer, which is in particular a phosphoric acid alkyl ester.

Item 52 is a curable composition according to item 51, wherein the phosphoric acid alkyl ester has the general formula: $OP(OR^1)(OR^2)(OR^3)$, wherein each of $R^1$, $R^2$ and $R^3$ is independently selected from a $C_1$-$C_{10}$ aliphatic

group and a $C_6$-$C_{20}$ aryl group, a $C_7$-$C_{30}$ alkylaryl group and a $C_7$-$C_{30}$ arylalkyl group.

Item 53 is a curable composition according to any of item 51 or 52, wherein the liquid flame-retardant plasticizer is selected to be 2-ethylhexyldiphenyl phosphate.

Item 54 is a curable composition according to any of items 47 to 53, which has a thermal conductivity of at least 0.5 W/mK, at least 1.0 W/mK, at least 1.5 W/mK, or even at least 2.0 W/mK, when measured according to the test method described in the experimental section.

Item 55 is a curable composition according to any of items 47 to 54, which has a thermal conductivity of from 0.5 to 10 W/mK, from 1.0 to 10 W/mK, from 1.5 to 10 W/mK, from 2.0 to 8.0 W/mK, from 2.0 to 7.0 W/mK, or even from 2.0 to 5.0 W/mK, when measured according to the test method described in the experimental section.

Item 56 is a curable composition according to any of items 47 to 55, which has an open time of at least 5 minutes, at least 10 minutes, or even at least 15 minutes.

Item 57 is a curable composition according to any of items 47 to 55, which has an open time of at least 60 minutes, at least 90 minutes, or even at least 120 minutes.

Item 58 is a (partially or fully) cured composition obtainable by at least partially curing the curable composition according to any of the preceding items, wherein the cured composition further comprises ammonia, and optionally, some residual of the ionogenic compound comprising an anion and ammonium as a cation.

Item 59 is a (partially or fully) cured composition comprising the self-curing reaction product of a cationically self-curable oligomeric compound, wherein the cured composition further comprises ammonia, and optionally, a ionogenic compound comprising an anion and ammonium as a cation.

Item 60 is a (partially or fully) cured composition according to item 59, wherein the cationically self-curable oligomeric compound is as described in any of items 1 to 24.

Item 61 is a (partially or fully) cured composition according to any of item 59 or 60, wherein the ionogenic compound is as described in any of items 25 to 37.

Item 62 is a (partially or fully) cured composition according to any of items 58 to 61, wherein the self-curing reaction product of the cationically self-curable oligomeric compound is substantially fully cured and has, in particular, a curing percentage greater than 90%, greater than 95%, greater than 98%, or even greater than 99%.

Item 63 is a (partially or fully) cured composition according to any of items 58 to 62, wherein the self-curing reaction product of the cationically self-curable oligomeric compound comprises or consists of a polyetherimine, in particular a linear or branched polyethylenimine (PEI).

Item 64 is a curing system suitable for an acid-curable composition comprising a cationically self-curable oligomeric compound, wherein the curing system comprises:

a) an ionogenic compound comprising an anion and ammonium as a cation; and
b) water.

Item 65 is a curing system according to item 64, wherein the cationically self-curable oligomeric compound is as described in any of items 1 to 24.

Item 66 is a curing system according to any of item 64 or 65, wherein the ionogenic compound is as described in any of items 25 to 37.

Item 67 is a battery module comprising a plurality of battery cells connected to a first base plate by a first layer of a first thermally-conductive gap filler composition according to any of items 47 to 63.

Item 68 is a battery subunit comprising a plurality of battery modules connected to a second base plate by a second layer of a second thermally-conductive gap filler composition, wherein each battery module comprises a plurality of battery cells connected to a first base plate by a first layer of a first thermally-conductive gap filler composition, wherein the first thermally-conductive gap filler composition and the second thermally-conductive gap filler composition are independently selected, and wherein each is a thermally-conductive gap filler composition according to any of items 47 to 63.

Item 69 is a method of manufacturing a battery module, which comprises the steps of:

a) applying a first layer of a first thermally-conductive gap filler composition according to any of items 47 to 63 to a first surface of a first base plate;
b) attaching a plurality of battery cells to the first layer to connect the battery cells to the first base plate; and
c) curing the first thermally-conducting gap filler composition.

Item 70 is a method of manufacturing a battery subunit, which comprises the steps of:

a) applying a second layer of a second thermally-conductive gap filler composition according to any of items 47 to 63 to a first surface of a second base plate;

b) attaching a plurality of battery modules to the second layer to connect the battery modules to the second base plate; and
c) curing the second thermally-conducting gap filler composition.

Item 71 is a method of manufacturing an acid-curable composition, comprising the steps of:

a) providing a base component comprising a cationically self-curable oligomeric compound;
b) providing a curing system for the cationically self-curable oligomeric compound, which comprises:

i. an ionogenic compound comprising an anion and ammonium as a cation; and
ii. water; and

c) combining the base component and the curing system.

Item 72 is a method of curing an acid-curable composition, comprising the steps of:

a) providing a base component comprising a cationically self-curable oligomeric compound;
b) providing a curing system for the cationically self-curable oligomeric compound, which comprises:

i. an ionogenic compound comprising an anion and ammonium as a cation; and
ii. water;

c) combining the base component and the curing system thereby forming an acid-curable composition; and
d) at least partially curing, preferably substantially fully curing, the acid-curable composition of step c) by initiating the curing system for the self-curable oligomeric compound, thereby forming a partially or a substantially fully cured composition.

Item 73 is a method according to any of item 71 or 72, wherein the cationically self-curable oligomeric compound is as described in any of items 1 to 24.
Item 74 is a method according to any of items 71 to 73, wherein the ionogenic compound is as described in any of items 25 to 37.
Item 75 is the use of an acid-curable composition according to any of items 1 to 57 or a (partially or fully) cured composition according to any of items 58 to 63, for industrial applications, in particular for automotive applications, more in particular for thermal management applications in the automotive industry.
Item 76 is the use of an acid-curable composition according to any of items 1 to 57 or a (partially or fully) cured composition according to any of items 58 to 63, for the manufacturing of a thermally-conductive gap filler composition.
Item 77 is the use of an acid-curable composition according to any of items 1 to 57 or a (partially or fully) cured composition according to any of items 58 to 63, for the manufacturing of a battery module comprising a plurality of battery cells, in particular for use in the automotive industry.
Item 78 is the use of a curing system according to any of items 64 to 66 for the manufacturing of an-acid curable composition, in particular comprising a cationically self-curable oligomeric compound.
Item 79 is the use of a curing system according to any of items 64 to 66 for thermal management applications, in particular in the automotive industry.
Item 80 is the use of a curing system according to any of items 64 to 66 for the manufacturing of a thermally-conductive gap filler composition.
Item 81 is the use of a curing system according to any of items 64 to 66, for the manufacturing of a battery module comprising a plurality of battery cells, in particular for use in the automotive industry.

## EXAMPLES

The present disclosure is further illustrated by the following examples. These examples are merely for illustrative purposes only and are not meant to be limiting on the scope of the appended claims.

### Test Methods:

#### 1) Curing percentage and curing time.

The curing percentage and curing time are measured by near IR spectroscopy according to the technique

described below (also referred to as the "peak area method"), using a Thermo Nicolet iS50 Series FT-IR spectrometer (available from Thermo Fisher Scientific Inc., USA) using a diffuse reflectance accessory that employs a gold coated integrating sphere. The spectrometer is equipped with a tungsten-halogen white light source, a calcium fluoride beam splitter and an InGaAs detector. Each near IR spectrum is acquired at 8 $cm^{-1}$ resolution with 16 scans and a spectral range of 10.000-4000 $cm^{-1}$.

The peak area of the aziridine overtone at 6020-6120 $cm^{-1}$ is tracked over the course of the curing reaction to determine the curing percentage (expressed in %), as well as the curing time (expressed in minutes). The peak area of the diagnostic aziridine overtone is determined by first subtracting the spectrum of a fully cured sample followed by a two-point linear baseline correction. If a reference spectrum of a fully cured sample cannot be obtained experimentally, a synthetic fully cured sample spectrum is obtained by subtracting a low cure sample spectrum from the highest cure sample spectrum until no evidence of the aziridine peak is observed. If compensation for changes in the effective path length is needed, peak area is normalized against a peak with minimal change throughout the reaction or a standard normal variate (SNV) correction is applied. After all corrections have been performed, % cure is determined by comparing sample peak area with the reference peak area of the corresponding uncured sample, or more specifically using Equation 1:

$$\text{Equation 1: } \%\ \text{Cure} = (1 - (\text{peak area}_{\text{sample}} / \text{peak area}_{\text{uncured reference sample}})) \times 100\%$$

**2) Thermal Conductivity Test**

The thermal conductivity of the cured compositions is measured according to the following procedure. Samples having a 10 mm by 10 mm dimension are cut from the cured films having a 1 mm thickness. The thermal diffusivity (a) of the cured samples is measured in square millimeters per second according to ASTM E1461/DIN EN 821 (2013) on a Netzsch-LFA Hyper Flash device (Netzsch, Selb, Germany). The thermal capacity (Cp) is calculated in Joules per gram per Kelvin using the Netzsch-LFA Hyper Flash in combination with a standard sample (Polyceram). The density (d) is determined in grams per cubic centimeter based on the weight and geometric dimensions of the sample. Using these parameters, the thermal conductivity (L) is calculated in Watts per meter • Kelvin according to L = a • d • Cp.

**Raw materials:**

In the examples, the following raw materials are used:

**APregon4** is a propylene-glycol bisaziridino-functional oligomer having a number average molecular weight of about 4400 g/mol, which may be obtained from the 3M Company, USA.
**Acclaim 4200** (A-4200) is a linear polypropylene ether polyol, commercially available from Covestro.
**Ammonium hexafluorophosphate** (AHFP) is commercially available from Alfa Aesar.
**Ammonium tetrafluoroborate** (ATFB) is commercially available from Alfa Aesar.
**Ammonium trifluoromethane sulfonate** (ATFS) is commercially available from Sigma-Aldrich.
**Tetrabutylammonium hexafluorophosphate** (THFP) is commercially available from Sigma-Aldrich.
**Tetrabutylammonium tetrafluoroborate** (TTFB) is commercially available from TCI.
**Trimethylsulfonium tetrafluoroborate** (STFB) is commercially available from Alfa Aesar.
**Behenic acid** (BA) is commercially available from Alfa Aesar.
**Santicizer 141** (S-141) is 2-ethylhexyl diphenyl phosphate, flame retardant, commercially available from Valtris.
**Disperbyk-145** (D-145) is a phosphoric ester salt of a high molecular weight copolymer, dispersant, commercially available from Byk.
**Martoxid TM1250** is alumina, thermally conductive filler, commercially available from Huber.
**BAK10** is spherical alumina, thermally conductive filler, commercially available from Bestry.
**BAK70** is spherical alumina, thermally conductive filler, commercially available from Bestry.

**Examples:**

*General preparation method of Examples 1-3 and Comparative Examples CE1-CE5 for testing:*

The exemplary acid-curable compositions for curing performance testing by near IR spectroscopy are prepared by weighing out 1.0 g of BAPE into a 20-dram glass vial. The appropriate molar equivalents of water are then added without mixing, and the outside of the vial is wrapped with an aluminum foil. The appropriate molar equivalents of the

selected ionogenic compound are then added into the vial. The resulting mixture is then stirred by hand with a small spatula for 30 seconds until a homogeneous mixture is achieved. As soon as this step is completed, the resulting mixture is tested after appropriate setting of the FT-IR spectrometer. The curing performance results (cure percentage and cure time) are shown in Table 1. When the cure percentage is below 100%, the cure time is not measured. In Table 1, all concentrations are given as molar equivalents relative to the molar amount of BAPE. Comparative examples CE1-CE4 do not comprise an ionogenic compound according to the present disclosure. Comparative example CE5 does not comprise water in the used curing system.

Table 1:

| Examples | Ionogenic compound (IC) | IC equivalent | Water equivalent | Cure percentage | Cure time (min) |
|---|---|---|---|---|---|
| 1 | AHFP | 11 | 110 | 100 | 30 |
| 2 | ATFS | 11 | 110 | 100 | 90 |
| 3 | ATFB | 11 | 110 | 100 | 120 |
| CE1 | THFP | 10 | 100 | 51 | - |
| CE2 | TTFB | 10 | 100 | 39 | - |
| CE3 | STFB | 11 | 110 | 43 | - |
| CE4 | BA | 5 | 50 | 42 | - |
| CE5 | AHFP | 10 | 0 | 68 | - |

As can be seen from the results shown in Table 1, the acid-curable compositions according to the present disclosure (Examples 1-3) provide excellent performance and characteristics as to curing completeness and curing speed, when compared to curable compositions not according to the present disclosure (Examples CE1-CE5).

*General preparation method for exemplary thermally-conductive gap filler compositions (Examples 4-7)*

The exemplary thermally-conductive gap filler compositions are prepared as two-part formulations (Part A and Part B). Part B contains an aziridino-functional polyether polymer as the cationically self-curable oligomeric compound.

*Preparation of Part B:*

Part B is prepared by mixing 7.6 g of APregon4 with 2.3 g of A-4200. Then, 0.16 g of D-145 is added. Then 54.0 g of BAK70, 18.0 g of BAK10 and 18.0 g of TM1250 are added in successive steps and mixed. The material is then degassed to avoid entrapped air.

*Preparation of Part A:*

Part A is prepared by first dissolving the appropriate molar equivalents of the selected ionogenic compound into the appropriate molar equivalents of water. The resulting dissolved ionogenic compound is set aside. Then, 0.16 g of D-145 and 9.1 g of S-141 are combined into a speedmixer container. Then, 53.0 g of BAK70, 17.6 g of BAK10 and 17.6 g of TM1250 are added in three successive steps and stirred by hand. The dissolved ionogenic compound is then added to the high-speed mixer container (DAC 150 FVZ Speedmixer, available from Hauschild Engineering, Germany) stirring at 3500 rpm speedmixer, and the material is mixed for 0.5 minutes until a homogeneous mixture is achieved. The material is then degassed to avoid entrapped air.

*Preparation of the exemplary thermally-conductive gap filler compositions:*

The thermally-conductive gap filler compositions are prepared by mixing 3 g of Part A with 3.12 g of Part B. the mixing is done by hand for one minute using scraping motions to avoid air entrainment. The formulations of the exemplary formulations (Examples 4-6) are shown in Table 2, wherein all concentrations are given as molar equivalents relative to the molar amount of the bisaziridino-functional polyether polymer (BAPE).

Table 2:

| Examples | Ionogenic compound (IC) | IC equivalent | Water equivalent | S-141 equivalent |
|---|---|---|---|---|
| 4 | AHFP | 5.5 | 55 | 15 |
| 5 | AHFP | 11 | 110 | 15 |
| 6 | ATFB | 11 | 110 | 15 |
| 7 | ATFB | 2.75 | 27.5 | 15 |

*Curing performance*

The curing performance of various thermally-conductive gap filler compositions (Examples 4 to 6) is tested. The curing performance results (cure time) are shown in Table 3.

Table 3: Results of the curing performance test.

| Examples | 4 | 5 | 6 |
|---|---|---|---|
| Cure time (min) | 36.4 | 32 | 45 |
| Cure percentage | 100 | 100 | 100 |

As can be seen from the results shown in Table 3, the thermally-conductive gap filler compositions according to the present disclosure provide excellent performance and characteristics as to curing efficiency and curing speed.

*Curing reproducibility performance*

The test is conducted by performing five side-by-side curing experiments using the formulation of Example 4 and determining the cure time by near IR spectroscopy. The curing performance results (cure time) are shown in Table 4.

Table 4: Results of the curing reproducibility test.

| Example 4 | Exp. 1 | Exp. 2 | Exp. 3 | Exp. 4 | Exp. 5 | Average Cure time | Standard deviation |
|---|---|---|---|---|---|---|---|
| Cure time (min) | 38 | 38 | 40 | 39 | 35 | 38 | 1.7 |

As can be seen from the results shown in Table 4, the thermally-conductive gap filler compositions according to the present disclosure provide excellent performance and characteristics as to curing reproducibility.

*Curing performance and stability upon ageing*

The curing performance is also tested upon various ageing conditions by exposing Part A of the formulation of Example 4 to various stringent ageing conditions before mixing with Part B and determining the cure time by near IR spectroscopy. The curing performance results (cure time) are shown in Table 5.

Table 5: Results of curing performance upon ageing.

| Ageing condition | none | 14 days at 50°C | 28 days at 50°C |
|---|---|---|---|
| Cure time (min) | 36.4 | 36 | 39.7 |

As can be seen from the results shown in Table 5, the thermally-conductive gap filler compositions according to the present disclosure provide excellent performance and characteristics as to curing performance upon ageing.

Moreover, exposing Part A of the formulation of Example 4 to the various stringent ageing conditions described in Table 5 shows no separation of liquid from the formulation (syneresis test). This proves the excellent stability of the thermally-conductive gap filler compositions according to the present disclosure.

*Thermal conductivity performance*

The thermal conductivity of the fully cured formulations of Examples 4 and 7 is determined. The results are shown in Table 6.

Table 6: Results of the thermal conductivity test.

| | Example 4 | Example 7 |
|---|---|---|
| Thermal conductivity (W/mK) | 2.4 | 2.4 |

As can be seen from the results shown in Table 6, the thermally-conductive gap filler compositions according to the present disclosure provide excellent performance and characteristics as to thermal conductivity.

## Claims

**1.** An acid-curable composition, comprising:

a) a base component comprising a cationically self-curable oligomeric compound;
b) a curing system for the cationically self-curable oligomeric compound, which comprises:

i. an ionogenic compound comprising an anion and ammonium as a cation; and
ii. water.

**2.** A curable composition according to claim 1, wherein the cationically self-curable oligomeric compound has a number average molecular weight no greater than 20.000 g/mol, no greater than 15.000 g/mol, no greater than 12.000 g/mol, no greater than 10.000 g/mol, or even no greater than 9.000 g/mol.

**3.** A curable precursor according to any of claim 1 or 2, wherein the cationically self-curable oligomeric compound is a polyfunctional compound comprising at least one cyclic amine, preferably two cyclic amines.

**4.** A curable precursor according to any of the preceding claims, wherein the cationically self-curable oligomeric compound is an aziridino-functional polyether oligomer, in particular an N-alkyl aziridino-functional polyether oligomer.

**5.** A curable composition according to any of the preceding claims, wherein the cationically self-curable oligomeric compound has the following formula:

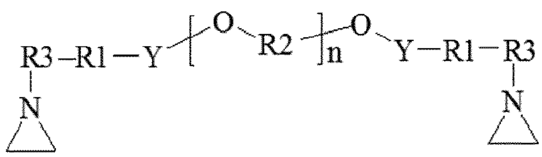

wherein:

$R^1$ is a covalent bond or an alkylene group;
each $R^2$ is independently selected from the group consisting of alkylene groups;
$R^3$ is a straight chain or branched alkylene groups;
Y is a divalent linking group;
and n is an integer selected such that the calculated number average molecular weight of the polyether oligomer is in particular greater than 2000 g/mol.

**6.** A curable composition according to any of the preceding claims, wherein the curing system for the cationically self-curable oligomeric compound is initiated at a temperature T1 which is in particular no greater than 90°C, no greater than 80°C, no greater than 60°C, no greater than 50°C, no greater than 40°C, no greater than 30°C, no greater than 25°C, no greater than 20°C, or even no greater than 15°C.

**7.** A curable composition according to any of the preceding claims, wherein the curing system for the cationically self-curable oligomeric compound results from the protonation of ammonia by a Broensted acid or a precursor of a Broensted acid.

**8.** A curable composition according to claim 7, wherein the Broensted acid is selected from the group consisting of hexafluorophosphoric acid, hexafluoroantimonic acid, tetrafluoroboric acid, sulfonic acids, phosphonic acids, fluorinated organic acids, polymeric acids, saturated carboxylic acids, unsaturated carboxylic acids, and any combinations or mixtures thereof.

**9.** A curable composition according to any of the preceding claims, wherein the anion of the ionogenic compound is selected from the group consisting of $PF_6^-$, $BF_4^-$, $SbF_6^-$, $AsF_6^-$, and $SbFsOH^-$.

**10.** A curable composition according to any of the preceding claims, which is a thermally-conductive gap filler composition comprising a thermally-conductive filler.

**11.** A cured composition comprising the self-curing reaction product of a cationically self-curable oligomeric compound, wherein the cured composition further comprises ammonia, and optionally, a ionogenic compound comprising an anion and ammonium as a cation.

**12.** A curing system suitable for an acid-curable composition comprising a cationically self-curable oligomeric compound, wherein the curing system comprises:

a) an ionogenic compound comprising an anion and ammonium as a cation; and
b) water.

**13.** A method of manufacturing an acid-curable composition, comprising the steps of:

a) providing a base component comprising a cationically self-curable oligomeric compound;
b) providing a curing system for the cationically self-curable oligomeric compound, which comprises:

i. an ionogenic compound comprising an anion and ammonium as a cation; and
ii. water; and

c) combining the base component and the curing system.

**14.** Use of an acid-curable composition according to any of claims 1 to 10 or a cured composition according to claim 11, for thermal management applications in the automotive industry, in particular for the manufacturing of a thermally-conductive gap filler composition.

**15.** Use of an acid-curable composition according to any of claims 1 to 10 or a cured composition according to claim 11, for the manufacturing of a battery module comprising a plurality of battery cells, in particular for use in the automotive industry.

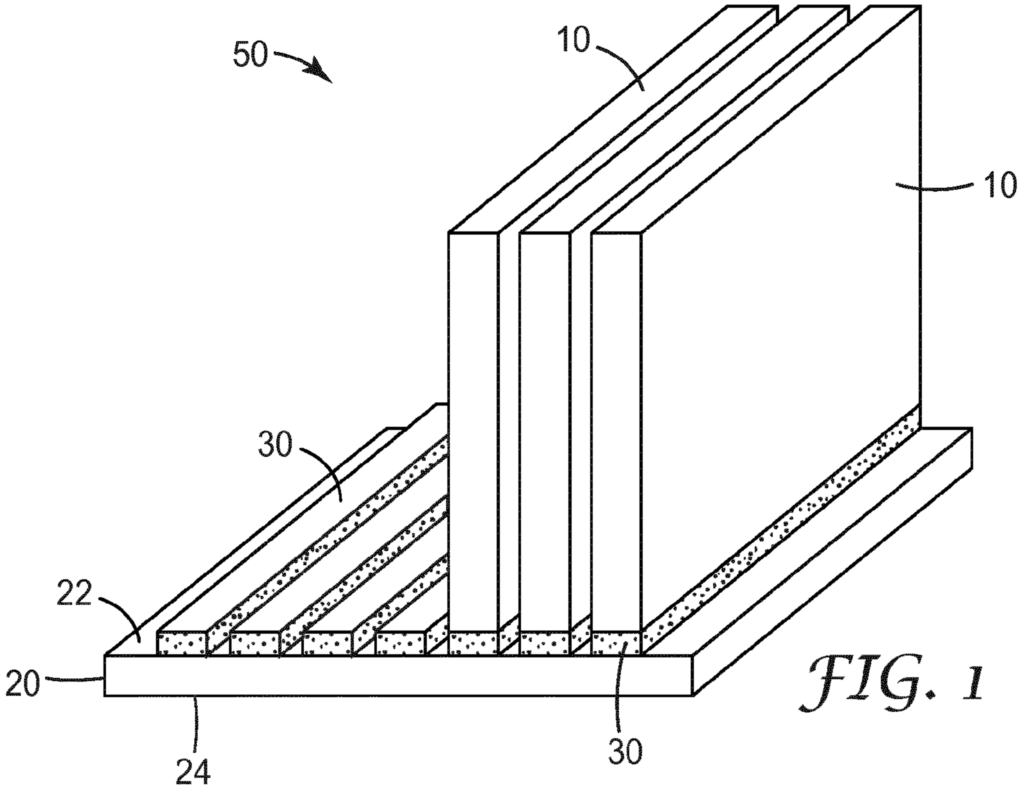


FIG. 1

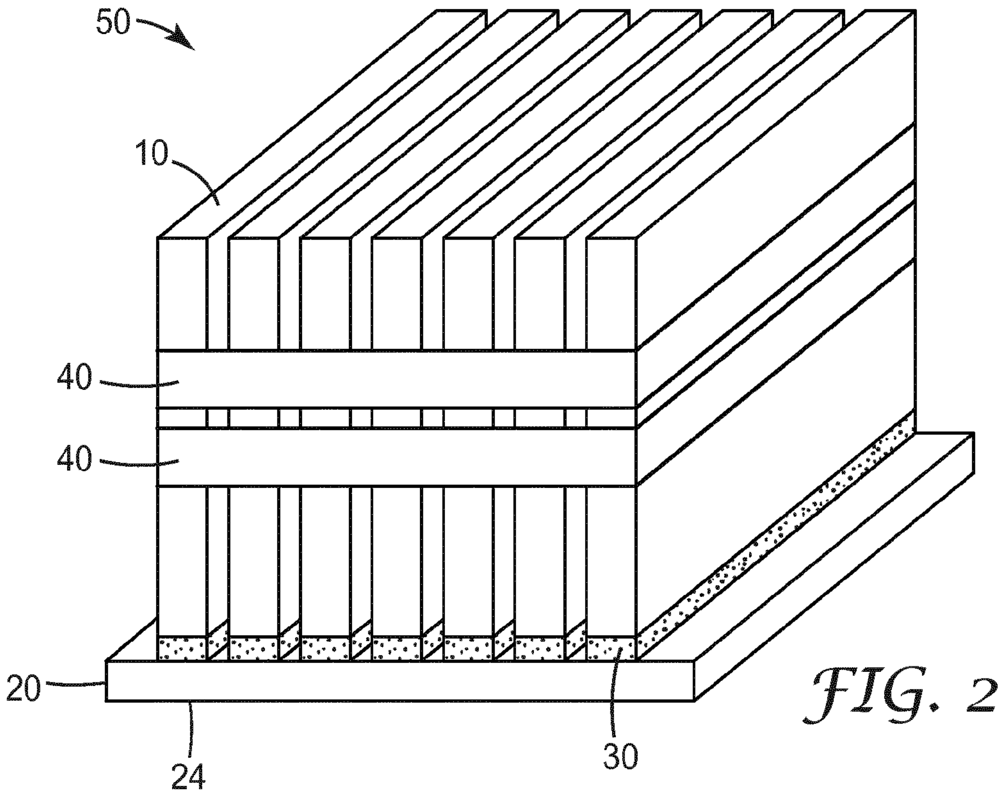


FIG. 2

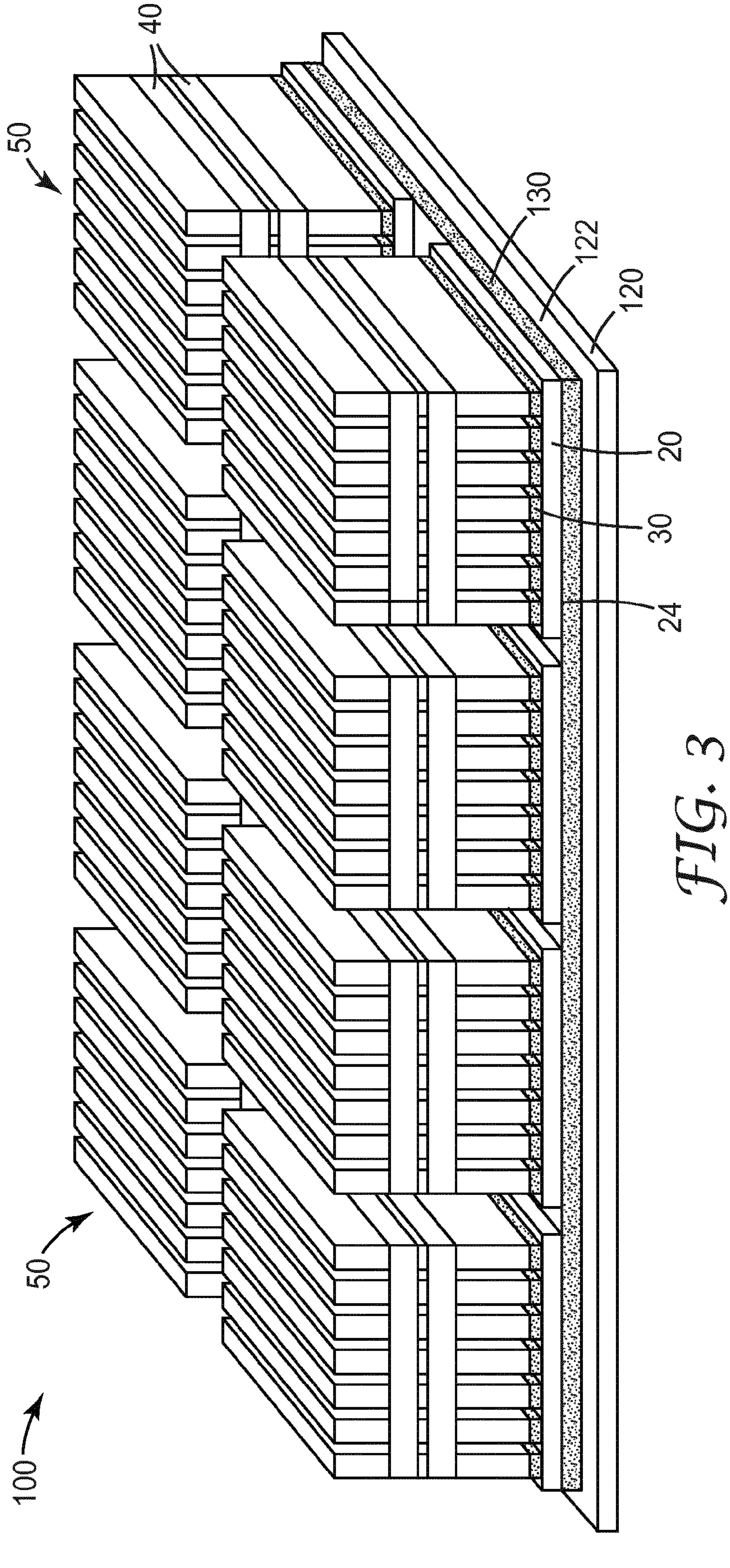


FIG. 3

Europäisches Patentamt
European Patent Office
Office européen des brevets

# EUROPEAN SEARCH REPORT

Application Number
EP 18 20 4593

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | DE 914 325 C (HOECHST AG)<br>1 July 1954 (1954-07-01)<br>* claim *<br>* examples 9-11 *<br>* page 3, lines 23-27 *<br>* page 2, lines 66-69 *<br>----- | 1-3,6-9, 11-13<br>4,5,10, 14,15 | INV.<br>C08G73/02 |
| X | US 3 842 019 A (KROPP J)<br>15 October 1974 (1974-10-15)<br>* claims 1, 3 *<br>* column 6, line 33 - line 59 *<br>* examples 4, 5; tables II, III *<br>* column 2, line 28 - line 31 *<br>----- | 1-3,7,8, 11-13 | |
| Y | EP 3 352 290 A1 (3M INNOVATIVE PROPERTIES CO [US]) 25 July 2018 (2018-07-25)<br>* paragraph [0001] *<br>* claims *<br>----- | 4,5,10, 14,15 | |

TECHNICAL FIELDS SEARCHED (IPC)

C08G
C08L

The present search report has been drawn up for all claims

1

| Place of search | Date of completion of the search | Examiner |
|---|---|---|
| Munich | 29 May 2019 | Mader, Margarita |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 20 4593

This annex lists the patent family members relating to the patent documents cited in the above-mentioned European search report. The members are as contained in the European Patent Office EDP file on
The European Patent Office is in no way liable for these particulars which are merely given for the purpose of information.

29-05-2019

| Patent document cited in search report | | Publication date | Patent family member(s) | | Publication date |
|---|---|---|---|---|---|
| DE 914325 | C | 01-07-1954 | NONE | | |
| US 3842019 | A | 15-10-1974 | NONE | | |
| EP 3352290 | A1 | 25-07-2018 | EP 3352290 | A1 | 25-07-2018 |
| | | | WO 2018134721 | A1 | 26-07-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4167618 A, Schmitt
- US 20080200585 A1, Klettke
- US 20130030076 A1, Weinmann
- US 6894144 B, Zech
- US 20030153726 A1, Eckhardt
- US 3453242 A, Schmitt

### Non-patent literature cited in the description

- **C. G. SWAIN et al.** *J. Am. Chem. Soc,* 1953, vol. 75, 141
- **A. B. ASH et al.** *J. Org. Chem.,* 1969, vol. 34, 4071